# FASCICULE DE BREVET EUROPEEN

(11) **EP 2 936 109 B1**
(45) Date de publication et mention de la délivrance du brevet: **12.08.2020**
(21) Numéro de dépôt: 13831830.8
(22) Date de dépôt: 19.12.2013
(51) Int. Cl.: G01M 11/02

(54) **PROCEDE DE VERIFICATION DE LA CONFORMITE D'UNE CARACTERISTIQUE OPTIQUE D'UNE LENTILLE OPHTALMIQUE ET DISPOSITIF ASSOCIE**
VERFAHREN ZUM ÜBERPRÜFEN DER COMPLIANCE EINER OPTISCHEN EIGENSCHAFT EINER OPHTHALMISCHEN LINSE UND ZUGEHÖRIGE VORRICHTUNG
METHOD FOR CHECKING THE COMPLIANCE OF AN OPTICAL CHARACTERISTIC OF AN OPHTHALMIC LENS AND ASSOCIATED DEVICE

(30) Priorité: 21.12.2012 FR 1262559
(43) Date de publication de la demande: 28.10.2015
(73) Titulaire: Essilor International, 94220 Charenton-le-Pont (FR)
(72) Inventeur: ALLIONE, Pascal, F-94220 Charenton-le-Pont (FR)
(74) Mandataire: Jacobacci Coralis Harle
(86) Numéro de dépôt international: PCT/FR2013/053197
(87) Numéro de publication internationale: WO 2014/111636

(56) Documents cités:
- EP-A1- 1 324 015
- DE-A1-102007 057 260
- US-B1- 6 573 997

## Description

### DOMAINE TECHNIQUE AUQUEL SE RAPPORTE L'INVENTION

La présente invention concerne un procédé de vérification de la conformité d'une caractéristique optique d'une lentille ophtalmique correctrice par rapport à une caractéristique optique attendue.

Elle concerne également un dispositif de vérification de la conformité d'une caractéristique optique d'une lentille ophtalmique par rapport à une caractéristique optique attendue.

### ARRIERE-PLAN TECHNOLOGIQUE

Il est important pour un opticien qui reçoit une lentille ophtalmique de vérifier rapidement et simplement que l'ensemble des caractéristiques optiques d'une lentille ophtalmique commandée correspondent bien aux caractéristiques optiques attendues, notamment en fonction de la prescription du porteur correspondant.

Ceci est d'autant plus vrai que les lentilles ophtalmiques présentent des caractéristiques optiques de plus en plus complexes en raison du développement de la conception personnalisée des lentilles ophtalmiques.

À cet effet, il est connu de mesurer la puissance frontale d'une lentille ophtalmique au moyen d'un frontofocomètre manuel. Néanmoins, ce type d'appareil est très sensible au centrage de la lentille ophtalmique sur un support de l'appareil et il ne permet de mesurer la puissance que de manière locale, typiquement sur une zone limitée de l'ordre de 5 à 10 millimètres (mm). Ceci peut être par exemple utilisé pour mesurer la puissance de verres progressifs en vision lointaine et en vision proche.

Les frontofocomètres électroniques du type *« fronto-mappers »* réalisent une cartographie globale des puissances optiques de la lentille ophtalmique mais sont en général chers et difficiles à mettre en œuvre.

On connaît également du document EP1324015 une méthode de mesure qui utilise un phénomène de Moiré pour mesurer les paramètres optiques d'une lentille ophtalmiques, par exemple sa carte des puissances optiques.

Cette méthode de mesure exploite la combinaison de deux images formées par les images respectives de deux grilles périodiques vues toutes les deux au travers de la lentille ophtalmique à vérifier. En se combinant, ces deux images forment une figure de Moiré, à partir de laquelle il est possible de calculer, moyennant une étape de calibration préalable, les caractéristiques optiques de la lentille ophtalmique.

La méthode de mesure du document EP1324015 requiert donc l'utilisation de deux grilles distinctes qui sont chacune imagées au travers de la lentille ophtalmique à mesurer, ce qui rend sa mise en œuvre complexe.

Par ailleurs, il est également important pour l'opticien de vérifier, lors de la réception d'une lentille ophtalmique correctrice que la conception optique attendue pour la lentille par son concepteur a bien été respectée par le fabricant de cette lentille. La conception optique aussi appelée « *design optique »* génère une répartition des puissances optiques adaptée à la correction recherchée.

Le « *design optique »* est une caractéristique optique de la lentille ophtalmique propre au concepteur de la lentille.

Ainsi, afin de garantir la conformité de la lentille ophtalmique fabriquée par rapport à la conception optique attendue, il est connu d'utiliser des moyens de repérage comme des étiquettes anti-contrefaçon (tag holographique ; code-barres du type « *data matrix »*) par exemple collés sur la face avant du verre. Ces moyens de repérage autorisent une traçabilité de la lentille ophtalmique de la conception à la réception et servent à identifier le concepteur de la lentille ophtalmique. Cependant, ce type de moyens est facilement falsifiable et ne garantit pas un niveau de sécurité satisfaisant.

### OBJET DE L'INVENTION

La présente invention propose un procédé pour contrôler de manière rapide et simple la performance optique d'une lentille ophtalmique. Le procédé, peu coûteux à mettre en œuvre, permet de contrôler des caractéristiques optiques d'une lentille ophtalmique globalement sur toute sa surface, ou localement sur certaines de ses zones d'intérêt.

Plus particulièrement, on propose selon l'invention un procédé de vérification de la conformité d'une caractéristique optique vérifiée d'une lentille ophtalmique vérifiée tel que défini dans la revendication 1.

En fonction de ladite mire déformée et de ladite mire non déformée, il est possible de vérifier une caractéristique optique locale, par exemple la puissance optique de ladite lentille ophtalmique vérifiée en vision lointaine, ou une caractéristique optique globale, comme le « design optique » de ladite lentille ophtalmique vérifiée propre au concepteur de celle-ci. Il est donc possible suivant le procédé selon l'invention de contrôler la performance optique de ladite lentille ophtalmique et en particulier de vérifier si la conception optique de ladite lentille ophtalmique a été respectée lors de sa fabrication. Il est également possible de détecter la reproduction illicite d'un « design optique ».

En optique, une *« mire »* est définie de manière générale comme étant un dispositif qui permet le contrôle d'un instrument d'optique. On peut citer par exemple les mires de Siemens et de Foucault ou les mires à damiers de type *« lens checker ».*

Au sens de la présente invention, une *« mire »* sera entendue de manière particulière comme étant un moyen pour la vérification de la lentille ophtalmique vérifiée.

On verra dans la description des différents modes de réalisation de l'invention que ce moyen pourra être soit matériel, par exemple un ensemble de motifs contrastés imprimé sur un support ou affiché sur un écran, soit immatériel, par exemple l'image d'un objet contrasté, en particulier l'image d'une autre mire, au travers d'une lentille.

En pratique, ladite lentille ophtalmique peut être fournie à cet effet avec ladite mire déformée et/ou ladite mire non déformée pour permettre à l'opticien l'ayant commandée de tester les caractéristiques optiques de cette lentille ophtalmique vérifiée en mettant en œuvre le procédé de vérification selon l'invention.

Ladite mire déformée contient une information relative à ladite caractéristique optique attendue, ce qui permet à l'opticien contrôlant ladite lentille ophtalmique vérifiée de déduire rapidement la conformité de ladite caractéristique optique vérifiée par rapport à ladite caractéristique optique attendue de ladite lentille ophtalmique vérifiée.

Ladite mire déformée est construite en fonction d'une mire intermédiaire, ladite mire intermédiaire étant l'image de ladite mire non déformée à travers une lentille ophtalmique attendue présentant ladite caractéristique optique attendue, dans des conditions optiques initiales telles que, dans lesdites conditions optiques déterminées de l'étape a), les positions relatives de ladite mire-image et de ladite mire déformée par rapport à ladite lentille ophtalmique vérifiée soient identiques aux positions relatives respectives de ladite mire non déformée et de ladite mire intermédiaire par rapport à ladite lentille ophtalmique attendue dans les conditions optiques initiales.

Ceci permet notamment de ne pas multiplier le nombre de mires originales et donc d'éviter des erreurs de manipulation par l'opticien ayant à contrôler un grand nombre de lentilles ophtalmiques. En effet, l'opticien ne dispose alors que d'une mire non déformée unique pouvant être combinée suivant le procédé de vérification selon l'invention à n'importe quelle mire-image, construite à partir d'une mire déformée reçue avec une lentille ophtalmique vérifiée commandée.

Selon d'autres caractéristiques avantageuses et non-limitatives du procédé selon l'invention :
- ladite mire intermédiaire est déterminée par un calcul de tracé de rayons optiques dans lesdites conditions optiques initiales correspondant à l'observation de ladite lentille ophtalmique attendue depuis le centre d'une pupille d'observation, ledit calcul de tracé de rayons optiques étant réalisé en fonction d'au moins un des paramètres suivants :
   - la position de ladite pupille d'observation par rapport à ladite lentille ophtalmique attendue,
   - la position de ladite pupille d'observation par rapport à ladite mire non déformée, ou
   - la position de ladite mire non déformée par rapport à ladite lentille ophtalmique attendue ;
- ladite mire non déformée et/ou ladite mire déformée et/ou ladite mire-image sont constituées d'un pavage de motifs de différentes couleurs ou de différents niveaux de gris, présentant ou non différents niveaux de transparence.

L'invention propose également un dispositif de vérification de la conformité d'une caractéristique optique vérifiée d'une lentille ophtalmique vérifiée tel que défini dans la revendication 4 ou dans la revendication 5.

D'autres caractéristiques avantageuses et non-limitatives du dispositif selon l'invention sont les suivantes :
- lesdits moyens d'acquisition d'images capturent une image de ladite mire-image, et ledit dispositif comprend également une unité de stockage, apte à fournir ladite mire non déformée auxdits moyens de combinaison d'images ;
- lesdits moyens de traitement électroniques comportent une unité de traitement locale, apte à communiquer avec lesdits moyens d'acquisition d'image et/ou lesdits moyens de combinaison d'images, et une unité de traitement distante, apte à communiquer avec ladite unité de traitement locale par l'intermédiaire d'un réseau, lesdites opérations de comparaison de ladite mire-test avec ladite mire de référence et de déduction de la conformité de ladite caractéristique optique vérifiée par rapport à ladite caractéristique optique attendue étant réalisées par ladite unité de traitement locale ou ladite unité de traitement distante ;
- ladite unité de traitement locale communique à ladite unité de traitement distante une référence de ladite lentille ophtalmique vérifiée, et ladite unité de traitement distante fournit à ladite unité de traitement locale ladite mire de référence associée à ladite lentille ophtalmique vérifiée ;
- ledit dispositif comprend des moyens de réglage permettant d'ajuster la position relative desdits premier et deuxième supports, desdits moyens d'éclairement et desdits moyens d'acquisition d'images les uns par rapport aux autres.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est un diagramme-bloc du procédé de vérification selon l'invention ;
- la figure 2 est une vue d'ensemble d'un premier mode de réalisation du dispositif de vérification selon l'invention ;
- la figure 3 est un schéma optique décrivant le principe du calcul par tracé de rayons optiques permettant de déterminer une mire intermédiaire à partir d'une mire non déformée et de construire une mire déformée ;
- la figure 4 est une vue de face d'un premier exemple d'une mire non déformée de forme carrée comprenant un pavage de motifs carrés noirs et blancs ;
- la figure 5 représente une mire intermédiaire calculée par tracé de rayons optiques à travers une lentille ophtalmique attendue à partir de la mire non déformée de la figure 4 ;
- la figure 6 représente une mire déformée déterminée à partir de la mire intermédiaire représentée sur la figure 5 ;
- la figure 7 représente la mire-test obtenue par superposition de la mire non déformée de la figure 4 et de la mire-image qui est l'image de la mire déformée de la figure 6 à travers une lentille ophtalmique vérifiée ;
- la figure 8 représente une mire de référence à comparer avec la mire-test représentée sur la figure 7 ;
- la figure 9 est une vue d'ensemble d'un deuxième mode de réalisation d'un dispositif de vérification selon l'invention, comportant une unité de stockage fournissant une mire non déformée et des moyens de traitement électroniques comprenant une unité de traitement locale et une unité de traitement distante ;
- la figure 10 est une vue d'ensemble d'un troisième mode de réalisation d'un dispositif de vérification selon l'invention, dans lequel la mire déformée provient d'un dispositif d'affichage numérique,
- la figure 11 est une vue d'ensemble d'un quatrième mode de réalisation d'un dispositif de vérification selon l'invention, utilisant des miroirs de renvoi et dans lequel la mire déformée et la mire non déformée proviennent de dispositifs d'affichage numérique ;
- la figure 12 représente un second exemple d'une mire non déformée comportant une zone locale d'intérêt ;
- la figure 13 représente une mire déformée comportant une figure particulière objet ;
- la figure 14 représente une mire-image comportant une figure particulière image obtenue en formant l'image de la mire déformée représentée sur la figure 13 à travers une lentille ophtalmique vérifiée présentant une caractéristique optique vérifiée non conforme à la caractéristique attendue ;
- la figure 15 représente la mire-test obtenue par superposition de la mire non déformée de la figure 12 et de la mire-image de la figure 14 ;
- la figure 16 représente une première mire de référence à comparer avec la mire-test de la figure 15 ;
- la figure 17 représente une seconde mire de référence à comparer avec la mire-test de la figure 15.

En préambule, on notera que les éléments identiques ou correspondants des différents modes de réalisation représentés sur les figures seront référencés par les mêmes signes et ne seront pas décrits de nouveau à chaque fois.

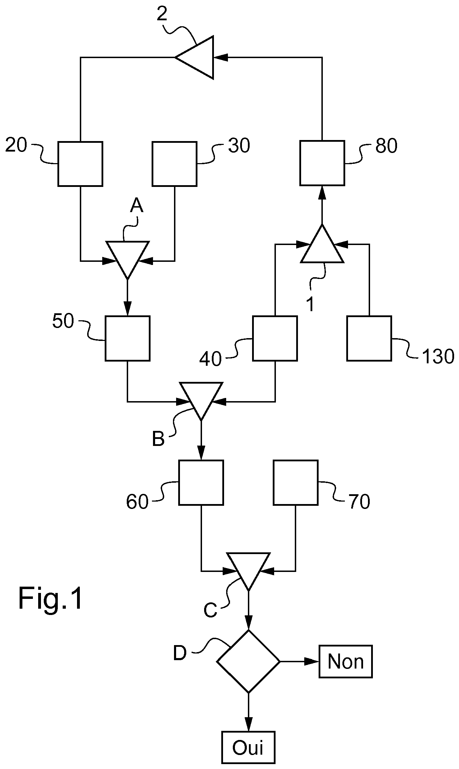

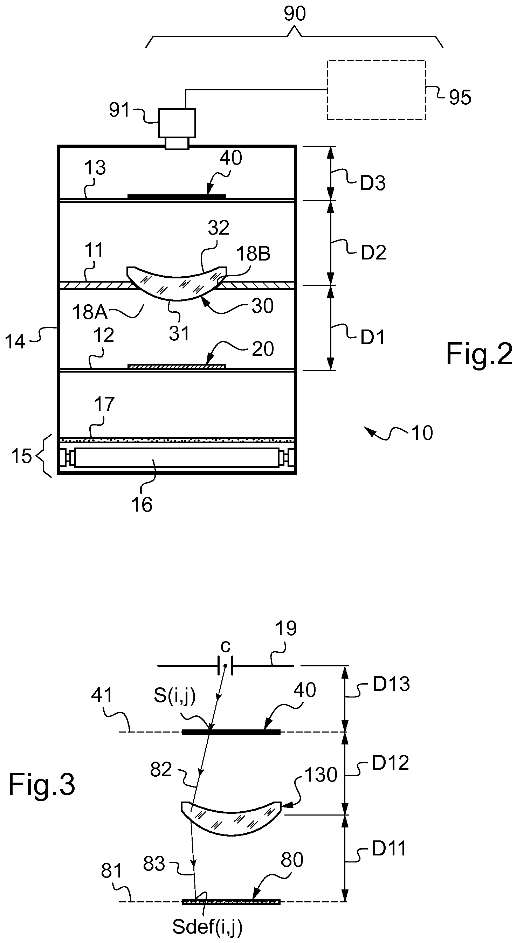

Sur la figure 1, on a représenté un diagramme-bloc schématique d'un exemple de réalisation du procédé de vérification selon l'invention. La mise en œuvre de ce procédé permet de vérifier qu'une caractéristique optique vérifiée d'une lentille ophtalmique vérifiée 30, telle que représentée sur les figures 2, 9, 10 et 11, est conforme par rapport à une caractéristique optique attendue.

Il s'agit par exemple, pour une lentille ophtalmique du type verre progressif, de la puissance en vision lointaine ou de la puissance en vision proche, de la longueur de progression de l'écart latéral entre le point de vision de près et le point de vision de loin (dit « *inset VP* »). Pour une lentille ophtalmique correctrice de l'astigmatisme, il peut s'agir de la puissance ou de l'angle du cylindre additionnel.

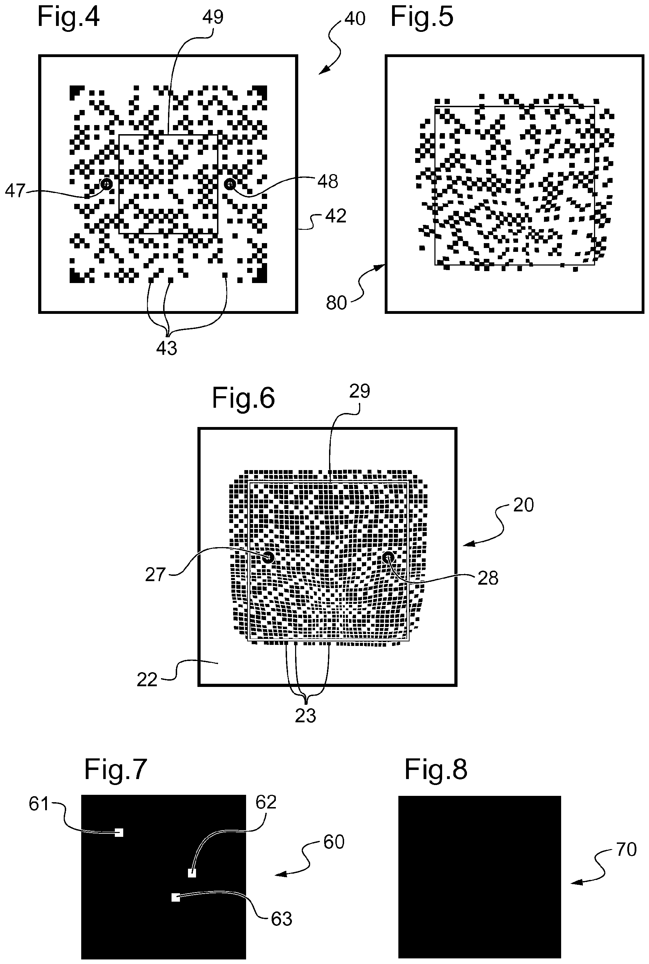

Pour cela, partant ici d'une première mire 20 présentant un contraste non homogène dont un exemple est représenté sur la figure 6, on détermine, dans une étape a) représentée par le bloc A de la figure 1, une mire-image 50, qui est l'image de ladite première mire 20 à travers la lentille ophtalmique vérifiée 30, dans des conditions optiques déterminées.

Par contraste « non homogène », on entend ici que la première mire 20 comporte des motifs contrastés et n'est pas de couleur ou de luminosité uniforme.

Ensuite, dans une étape b) représentée par le bloc B de la figure 1, on combine alors une deuxième mire 40 avec la mire-image 50 pour former une mire-test 60.

On a représenté sur la figure 4 un exemple de deuxième mire 40 adéquate, qui sera décrit plus en détails ultérieurement.

La figure 7 représente la mire-test 60 correspondant à la superposition de la mire-image 50 et de la deuxième mire 40 de la figure 4.

Dans une étape c) représentée par le bloc C de la figure 1, on compare enfin la mire-test 60 à au moins une mire de référence 70, dont un exemple est représenté sur la figure 8.

Cette comparaison permet de déduire, dans une étape d) du procédé, représentée par le bloc D de la figure 1, si la caractéristique optique de la lentille ophtalmique vérifiée 30 est conforme à une caractéristique optique attendue.

Dans le cas où la caractéristique optique vérifiée de la lentille ophtalmique vérifiée 30 est conforme à la caractéristique optique attendue, ladite mire-test 60 est sensiblement identique à ladite mire de référence 70 utilisée lors de l'étape de comparaison.

Dans l'exemple de réalisation du procédé de vérification selon l'invention décrit en référence aux figures 1 à 17, la première mire 20 est une mire déformée (voir figure 6) et la deuxième mire 40 est une mire non déformée (voir figure 4).

On entend par là que la mire déformée 20 est un objet présentant des motifs contrastés, obtenus par détermination de l'image, à travers une lentille ophtalmique, d'un objet initial présentant des motifs initiaux contrastés.

Les motifs de la mire déformée 20 correspondent ainsi aux motifs initiaux déformés par le passage des rayons lumineux au travers de cette lentille ophtalmique.

À l'inverse, la deuxième mire 40 est une mire non déformée : ses motifs contrastés ne sont pas déterminés par une quelconque déformation induite par une lentille ophtalmique sur des motifs initiaux.

Avantageusement, suivant le procédé de vérification selon l'invention, ladite mire déformée 20 est déterminée, préalablement à l'étape a), en fonction de ladite caractéristique optique attendue, et plus particulièrement également en fonction de la mire non déformée 40.

Plus précisément, la mire déformée 20 est de préférence construite à partir d'une mire intermédiaire 80 dans une étape préalable à l'étape a), qui est représentée par le bloc 2 de la figure 1, elle-même de préférence déterminée à partir de la mire non déformée 40, comme représenté schématiquement sur la figure 1 par le bloc 1.

Selon un mode de réalisation particulièrement avantageux décrit plus en détails par la suite, la mire intermédiaire 80 est l'image dans des conditions optiques initiales de la mire non déformée 40 à travers une lentille ophtalmique attendue 130 qui présente la caractéristique optique attendue.

Ces conditions optiques initiales permettant de déterminer la mire intermédiaire 80 correspondent aux conditions optiques déterminées pour la formation de la mire-image 50 tel que décrit ci-dessus.

On comprend donc que la mire déformée 20 et la mire non déformée 40 sont intimement liées entre elles par l'intermédiaire de la lentille ophtalmique attendue 130, dans la mesure où la mire déformée 20 est obtenue à partir de l'image de la mire non déformée 40 au travers de cette lentille ophtalmique attendue 130.

En effet, la lentille ophtalmique attendue 130 présentant, comme toute lentille ophtalmique, des aberrations optiques, l'image de la mire non déformée 40 au travers de cette lentille ophtalmique attendue 130 est déformée par celle-ci.

On comprendra à la lumière des figures 2 et 3 en quoi les conditions optiques déterminées correspondent aux conditions optiques initiales.

De préférence, le bloc 1 correspond à une étape préalable de calcul optique. On entend par là que la mire intermédiaire 80 est calculée en fonction de la lentille ophtalmique attendue 130 à partir de la mire non déformée 40 grâce à une méthode de tracé de rayons optiques, qui sera décrite plus en détails par la suite.

On a représenté sur les figures 2, 9, 10 et 11 quatre modes de réalisation d'un dispositif 10 de vérification autorisant la mise en œuvre du procédé selon l'invention.

Ce dispositif 10 de vérification est ici représenté en configuration verticale, mais on comprendra que la réalisation de ce dispositif n'est pas limitée à cette configuration. On fera néanmoins référence par la suite aux parties hautes et basses du dispositif de vérification conformément à cette configuration verticale.

Le dispositif 10 comprend un cadre 14 muni de moyens de montage des différents éléments qui sont décrits plus en détails par la suite.

Quel que soit le mode de réalisation du dispositif 10 considéré, il comprend un premier support 11 apte à recevoir une lentille ophtalmique vérifiée 30 dont on souhaite vérifier la conformité par rapport à une caractéristique optique attendue.

Ce premier support 11 est ici disposé dans une position sensiblement horizontale.

Le premier support 11 est préférentiellement opaque. Il possède une ouverture 18A en son centre permettant de laisser passer les rayons lumineux à travers la lentille ophtalmique vérifiée 30 disposée sur le premier support 11.

L'ouverture 18A est entourée d'un bord 18B contre lequel repose le contour de la lentille ophtalmique vérifiée 30.

La forme et la taille du bord 18B de l'ouverture 18A sont telles que la lentille ophtalmique vérifiée 30 est maintenue en place en regard de l'ouverture 18A.

La lentille ophtalmique vérifiée 30 présente par exemple ici une face avant 31 convexe et sphérique, et les déplacements de la lentille ophtalmique vérifiée 30 sur le premier support 11 autour de l'ouverture 18A de forme circulaire sont limités. Ainsi, le positionnement de la lentille ophtalmique vérifiée 30 en est ici facilité.

Le premier support 11 comporte en outre de préférence des moyens de centrage de la lentille ophtalmique vérifiée 30 avec l'ouverture 18A. Il peut s'agir par exemple d'un système d'ergots présents sur le premier support 11 adaptés à coopérer avec des encoches prévues à la périphérie de la lentille ophtalmique vérifiée 30.

Les ergots viennent alors se ficher dans les encoches pour maintenir la lentille ophtalmique dans la position voulue.

Le premier support 11 peut également comporter des moyens de repérage permettant de matérialiser le centre de l'ouverture 18A. Il peut s'agir par exemple d'un ensemble de traits placés de part et d'autre de l'ouverture 18A.

La lentille ophtalmique vérifiée 30 comporte alors également des moyens de repérage permanents ou temporaires disposés sur l'une de ses faces 31, 32. Il peut s'agir par exemple des marquages utilisés pour le centrage de la lentille ou d'étiquettes transparentes appliquées sur au moins l'une des faces 31, 32 de la lentille ophtalmique vérifiée 30, lesdites étiquettes présentant une ou plusieurs lignes permettant de repérer certains méridiens de la lentille ophtalmique vérifiée 30. Le positionnement de la lentille ophtalmique vérifiée 30 par rapport à l'ouverture 18A de telle sorte que les marques de la lentille ophtalmique vérifiée 30 et que les traits de repérage du premier support 11 soient alignés permet d'assurer un centrage précis de la lentille ophtalmique vérifiée 30 par rapport à l'ouverture 18A du premier support 11.

En variante, le premier support peut être transparent et ne comporte alors pas d'ouverture.

Le dispositif 10 comprend également un deuxième support 12 apte à recevoir ici la mire déformée 20.

L'agencement de ce deuxième support 12 varie selon les modes de réalisation envisagés et sera décrit plus en détails ultérieurement.

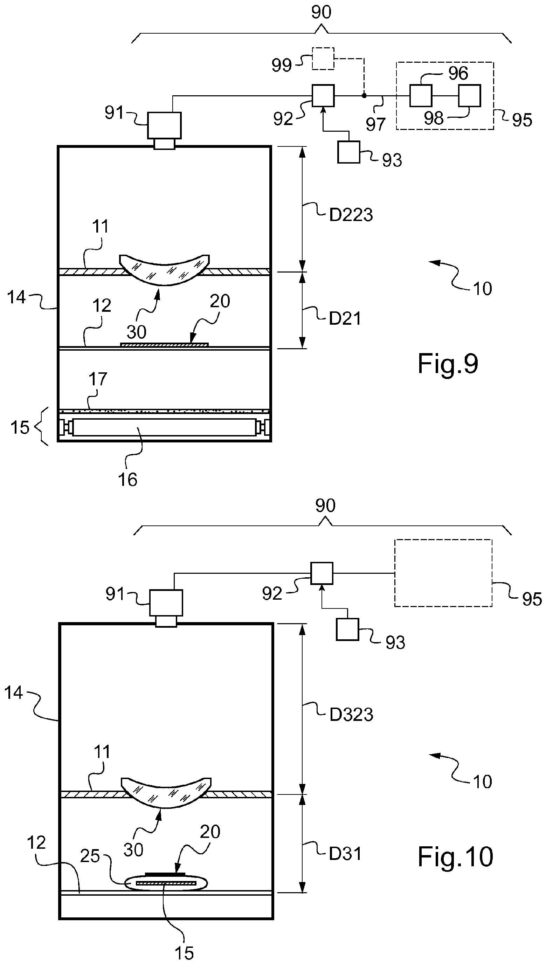

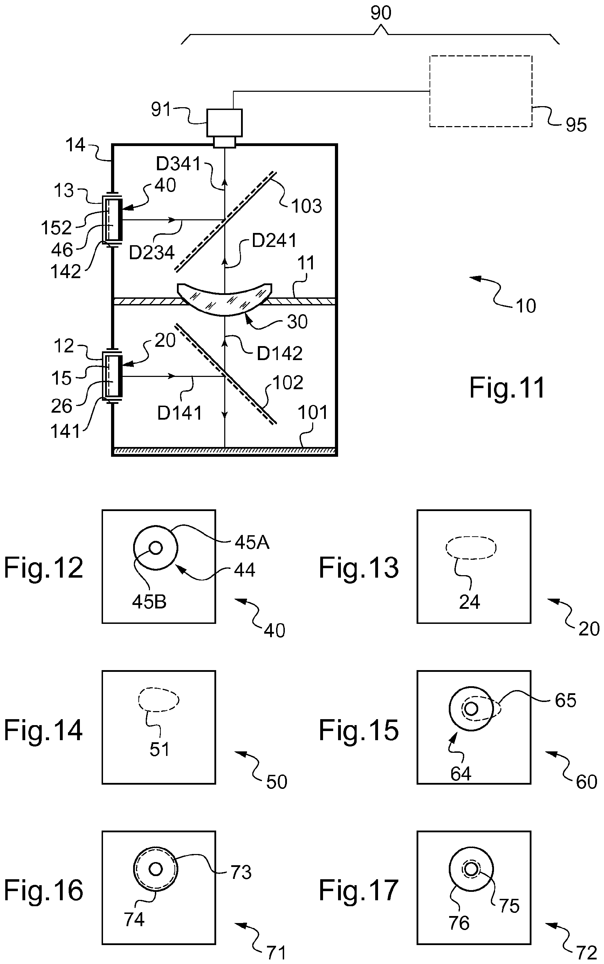

La mire déformée 20 peut être analogique, c'est-à-dire portée par un support physique, comme cela est le cas dans les modes de réalisation représentés sur les figures 2 et 9, ou numérique, c'est-à-dire stockée dans la mémoire d'un dispositif électronique ou informatique et affichée sur un appareil numérique comme cela est le cas dans les modes de réalisation représentés sur les figures 10 et 11.

Dans ce dernier cas, il est alors prévu des moyens d'affichage de la mire déformée 20 numérique. Ces moyens d'affichage peuvent en outre former ledit deuxième support et/ou lesdits moyens d'éclairement, comme cela sera décrit plus en détails ultérieurement. Le dispositif 10 comprend en outre, des moyens d'éclairement 15 aptes à éclairer ici la mire déformée 20.

Les moyens d'éclairement 15 peuvent comporter une source lumineuse directe ou indirecte, comme il sera décrit plus en détails ultérieurement dans les différents modes de réalisation.

On entend ici par source lumineuse directe une source lumineuse émettant des rayons lumineux de manière intrinsèque, en l'absence de toute autre source lumineuse.

On entend par source lumineuse indirecte une source lumineuse secondaire réfléchissant et/ou diffusant la lumière émise par une autre source lumineuse. Il peut alors s'agir d'une simple surface blanche éclairée par la lumière ambiante.

Le dispositif 10 comporte de plus des moyens d'acquisition d'images 91, apte à capturer une image de la mire-image 50. Dans ce premier mode de réalisation, la mire-image 50 est l'image de la mire déformée 20 à travers la lentille ophtalmique vérifiée 30.

Les moyens d'acquisition d'images 91 sont de préférence une caméra numérique qui permet de capturer des images à des instants particuliers.

En variante, il peut s'agir par exemple d'un appareil photographique ou d'une caméra d'un téléphone portable ou d'une tablette numérique.

Le dispositif 10 comprend également des moyens de combinaison d'images (13 ; 92 ; 103) aptes à combiner la mire-image 50 avec ici la mire non déformée 40 pour former la mire-test 60.

Le dispositif 10 comprend enfin des moyens de traitement électroniques 95 aptes à communiquer avec lesdits moyens de combinaison d'images 92 délivrant le signal représentatif de la mire-test 60.

Les moyens de traitement électroniques 95 sont ainsi programmés pour comparer la mire-test 60 à au moins une mire de référence 70, et déduire la conformité de la caractéristique optique vérifiée de la lentille ophtalmique vérifiée 30 avec la caractéristique optique attendue. En d'autres termes, les moyens de traitement électroniques 95 analysent le signal représentatif de la mire-test 60 pour délivrer un signal représentatif de la conformité de la caractéristique optique vérifiée avec la caractéristique optique attendue.

Les moyens d'acquisition d'images 91 et les moyens de traitement électroniques 95 font partie d'une chaîne électronique de traitement 90.

Dans un premier mode de réalisation du dispositif 10 représenté sur la figure 2, la mire déformée 20 et la mire non déformée 40 sont des mires analogiques portées chacune par un support physique, comme cela est expliqué plus en détails plus loin.

Le premier support 11 est disposé dans une partie médiane du cadre 14 du dispositif 10.

Lesdits moyens d'éclairement 15 sont disposés à l'une des extrémités du cadre 14 du dispositif 10, ici à l'extrémité basse de ce dispositif et lesdits moyens d'acquisition d'image 91 sont disposés à l'autre extrémité du dispositif 10, ici à l'extrémité haute du dispositif.

En pratique, les moyens d'éclairement 15 comprennent ici un arrangement de tubes fluorescents 16 émettant une lumière blanche et un diffuseur 17 permettant d'uniformiser la distribution de lumière émise par les tubes fluorescents 16. Le diffuseur 17 peut être par exemple constitué d'une plaque de verre translucide recouverte d'une couche diffusante et disposée ici parallèlement au premier support 11. Ces moyens d'éclairement 15 constituent ici une source lumineuse directe.

Le deuxième support 12 de la mire déformée 20 est disposé sensiblement horizontalement, entre le premier support 11 et les moyens d'éclairement 15.

Ce deuxième support 12 de la mire déformée 20 est situé à une première distance D1 du premier support 11 de la lentille ophtalmique vérifiée 30.

Afin de transmettre la lumière reçue des moyens d'éclairement 15 de manière optimale, c'est-à-dire en minimisant la distorsion, l'absorption et la diffusion, le deuxième support 12 est de préférence constitué d'une plaque mince transparente, en verre minéral ou organique, par exemple en polyméthacrylate de méthyle ou en polycarbonate, d'épaisseur réduite, par exemple inférieure à 1 millimètre.

En variante, le deuxième support peut être constitué d'une plaque opaque percée en son centre par une ouverture de forme et de taille adaptées à laisser passer la lumière issue des moyens d'éclairement pour éclairer la mire déformée.

La mire déformée 20 comporte un film au moins partiellement transparent. Elle est par exemple réalisée par impression de motifs 23 sur une feuille 22 en plastique transparent. Les motifs peuvent présenter différents niveaux de transparence, être colorés ou présenter un niveau de gris déterminé.

Les motifs peuvent être par exemple totalement transparents ou totalement opaques.

La mire déformée 20 transmet donc la lumière avec une distribution d'intensités et/ou de couleurs dépendant des différents motifs présents dans la mire déformée 20. On comprend donc que le contraste que la mire déformée 20 est non homogène.

Un exemple de réalisation de la mire déformée 20 est représenté sur la figure 6. Cette mire déformée 20 présente un contraste non homogène et comporte ici une feuille transparente 22 avec des motifs noirs opaques 23, formant un pavage irrégulier.

Il faut comprendre ici que les motifs 23 noirs opaques absorbent totalement la lumière tandis que les parties représentées en blanc sur la figure 6 sont transparentes, c'est-à-dire transmettent la lumière sensiblement totalement.

Le dispositif 10 de la figure 2 comprend en outre un troisième support 13 apte à recevoir la mire non déformée 40.

Pour les mêmes raisons que celles évoquées pour le second support 12, le troisième support 13 comprend de préférence une plaque mince transparente.

En variante, le troisième support 13 peut comprendre une plaque opaque percée en son centre par une ouverture de forme et de taille adaptées à laisser passer la lumière ayant traversé la lentille ophtalmique vérifiée 30 pour éclairer la mire non déformée 40.

Le troisième support 13 est disposé entre le premier support 11 et les moyens d'acquisition d'images 91. Il est ici situé à une deuxième distance D2 du premier support 11 de la lentille ophtalmique 30.

La mire non déformée 40 est une mire analogique. Elle est constituée, de manière similaire à la mire déformée 20, d'un film ou d'une feuille au moins partiellement transparente comportant des motifs avec différents niveaux de transparence, les motifs étant colorés ou présentant un niveau de gris déterminé.

Dans l'exemple de réalisation de la mire non déformée 40 représenté sur la figure 4, celle-ci comporte une feuille transparente 42 et des motifs carrés noirs opaques 43 formant un pavage régulier. Les motifs de la mire non déformée 40 sont donc droits et réguliers, sans aucune déformation particulière. On comprend donc que le contraste de la mire non déformée 40 est non homogène.

Comme précédemment, les motifs représentés en noir sur la figure 4 absorbent sensiblement totalement la lumière provenant de la lentille ophtalmique 30, tandis que les motifs blancs sont transparents, c'est-à-dire transmettent la lumière. Ainsi, la mire non déformée 40 de la figure 4 peut par exemple être réalisée par impression sur un film transparent.

On décrira par la suite en détails comment la mire déformée 20 de la figure 6 est obtenue à partir de la mire non déformée 40 de la figure 4.

En variante, la mire non déformée pourrait être une mire du type de celle représentée sur la figure 6, avec des carrés noirs déformés, de sorte que la mire déformée, obtenue à partir de la mire non déformée en fonction de la lentille ophtalmique attendue, soit une mire du type de celle représentée sur la figure 4.

Les positions relatives des différents éléments optiques constituant le dispositif de vérification selon l'invention, à savoir : la mire déformée 20, la lentille ophtalmique vérifiée 30, la mire non déformée 40 et lesdits moyens d'acquisition d'images 91, sont déterminées de manière précise, c'est-à-dire avec une précision de positionnement de l'ordre de 0.1 millimètre, par le positionnement relatif des premier, deuxième et troisième supports 11, 12, 13 par rapport au cadre 14 du dispositif 10.

À cet effet, le dispositif 10 comprend des moyens de réglage permettant de positionner le premier et le deuxième support 11, 12, lesdits moyens d'éclairement 15 et lesdits moyens d'acquisition d'image 91 les uns par rapport aux autres.

Ces moyens de réglage comprennent par exemple une règle graduée qui équipe au moins un des montants verticaux du cadre 14 du dispositif 10. Ils peuvent également comprendre des moyens de pointage qui équipent chacun des premier 11, deuxième 12 et troisième 13 supports et permettent de repérer la position de chacun de ces supports en lisant la graduation correspondante sur la règle graduée.

En outre, afin de positionner très précisément la mire déformée 20 et/ou la mire non déformée 40 par rapport à la lentille ophtalmique vérifiée 30, la mire déformée 20 et/ou la mire non déformée 40 comportent également des moyens de repérage 27, 28, 29, 47, 48, 49 spécifiques, adaptées à coopérer avec les micro-gravures présentes à la surface de la lentille ophtalmique vérifiée 30 ou tout autre marque permanente ou temporaire disposée sur cette lentille ophtalmique vérifiée 30.

Les micro-gravures ou les marques permanentes ou temporaires de la lentille ophtalmique 30 forment par exemple des lignes, des points ou toute autre figure particulière. Il s'agit par exemple des marquages utilisés pour le centrage de la lentille au cours de sa fabrication.

Les moyens de repérage 27, 28, 29 de la mire déformée 20 et/ou les moyens de repérage 47, 48, 49 de la mire non déformée 40 peuvent être des points de référence, des figures particulières, par exemple des lignes, des cercles, des carrés ou des croix, lesdits moyens de repérage 27, 28, 29, 47, 48, 49 étant placés à différents endroits sur lesdites mire déformée 20 et mire non déformée 40.

Sur les exemples représentés sur les figures 4 et 6, il est prévu par exemple deux points 27, 28, 47, 48 de repère circulaires et un carré 29, 49 sur chacune des mire déformée 20 et mire non déformée 40.

Ainsi, un positionnement transversal précis de la lentille ophtalmique 30 par rapport à la mire déformée 20 et/ou à la mire non déformée 40 peut être assuré en superposant les moyens de repérage 27, 28, 29, 47, 48, 49 présents sur la mire déformée 20 et/ou la mire non déformée 40 avec les micro-gravures présentes à la surface de la lentille ophtalmique vérifiée 30 sur l'image enregistrée par les moyens d'acquisition d'image 91.

Par ailleurs, on peut prévoir que chaque deuxième et troisième support 12, 13 comporte des moyens de réception de la mire déformée 20 ou de la mire non déformée 40 correspondante facilitant le positionnement transversal de la mire déformée 20 par rapport à la mire non déformée 40. Il peut s'agir par exemple de glissières. La mire correspondante peut alors comporter un cadre adapté à coopérer avec cette glissière.

Les moyens d'acquisition d'images 91 sont situés à une troisième distance D3 au-dessus du troisième support 13 de la mire non déformée 40, de telle sorte que le troisième support 13 est disposé entre le premier support 11 de la lentille ophtalmique vérifiée 30 et lesdits moyens d'acquisition d'images 91.

Les première, deuxième et troisième distances D1, D2 et D3 séparant respectivement les premier et deuxième supports 11, 12, les premier et troisième supports 11, 13 et le troisième support 13 et les moyens d'acquisition d'image 91 forment au moins partiellement les conditions optiques déterminées de l'utilisation du dispositif 10 de vérification.

Elles sont prédéterminées en fonction des conditions optiques initiales utilisées lors du calcul de la mire déformée 20 à partir de la mire non déformée 40, comme décrit plus en détails plus loin.

Elles dépendent alors de la caractéristique optique attendue de la lentille.

Ces première, deuxième et troisième distances D1, D2 et D3 sont en particulier déterminées pour que le dispositif 10 permette de former une mire-image 50 qui est ici l'image de la mire déformée 20 à travers la lentille ophtalmique vérifiée 30 dans un plan sensiblement confondu avec le plan dans lequel est située la mire non déformée 40.

Ainsi, dans ce premier mode de réalisation, lesdits moyens de combinaison d'images comportent le troisième support 13 de la mire non déformée 40. En effet, c'est grâce au troisième support 13 qu'il est possible ici de positionner précisément la mire non déformée 40 dans le plan de la mire-image 50, de sorte que dans ce plan, la mire non déformée 40 et la mire-image 50 se superposent pour former la mire-test 60 dont l'image est capturée par lesdits moyens d'acquisition d'images 91.

Un opérateur qui souhaite vérifier la conformité d'une caractéristique optique vérifiée d'une lentille ophtalmique vérifiée 30 par rapport à une caractéristique optique attendue reçoit ladite lentille ophtalmique vérifiée 30 et une mire déformée 20 associée qu'il place dans le dispositif 10 selon l'invention.

La mire déformée 20 est associée à des conditions optiques déterminées du dispositif 10.

Ainsi, selon une première possibilité, la mire déformée 20 reçue par l'opérateur est accompagnée des valeurs à respecter pour les première, deuxième et troisième distances D1, D2 et D3. L'opérateur règle alors, grâce aux différents moyens de réglage précédemment décrits, les positions relatives des différents éléments du dispositif en fonction des valeurs requises.

Selon une deuxième possibilité, les valeurs à respecter pour les première, deuxième et troisième distances D1, D2 et D3 sont fixées et prédéterminées en fonction du dispositif. L'opérateur n'a alors aucun réglage supplémentaire à effectuer sur le dispositif 10.

La mire non déformée 40 peut être différente pour chacun des dispositifs de vérification 10 en service auprès des opérateurs, permettant d'adapter cette mire non déformée 40 en fonction de la configuration du dispositif 10, et des conditions optiques déterminées, notamment des distances D1, D2 et D3.

En revanche, il est possible d'utiliser la même mire non déformée 40 pour toutes les lentilles ophtalmiques à vérifier à un même dispositif 10. Dans ce cas, la mire non déformée 40 peut être placée à demeure dans le dispositif 10.

En pratique, pour mettre en œuvre le procédé selon l'invention, l'opérateur place la lentille ophtalmique vérifiée 30 reçue sur le premier support 11 du dispositif 10. Il ajuste alors sa position en utilisant les moyens de centrage présents sur le premier support 11 et sur l'une des faces 31, 32 de la lentille ophtalmique vérifiée 30.

La face avant 31 de la lentille ophtalmique vérifiée 30 comporte ici par exemple une étiquette comportant deux lignes représentant les axes horizontal et vertical de la lentille ophtalmique vérifiée 30.

Ce réglage fait, l'opérateur place la mire déformée 20 représentée sur la figure 6 sur le deuxième support 12 du dispositif 10.

On se place ici dans le cas où les première, deuxième, et troisième distances D1, D2 et D3 sont prédéterminées et fixées.

En variante, l'opérateur ajuste la première distance D1 entre le premier support 11 et le deuxième support 12 au moyen de la règle graduée du cadre 14 du dispositif 10 en fonction des indications fournies avec la mire déformée 20.

L'opérateur superpose les points de repérage 27, 28 de la mire déformée 20 avec les micro-gravures présentes sur la lentille ophtalmique vérifiée 30 afin de centrer la mire déformée 20 par rapport à la lentille ophtalmique vérifiée 30.

Pour cela, l'opérateur visualise les images enregistrées par les moyens d'acquisition d'image 91. Ceux-ci sont par construction alignés avec les différents supports 11, 12, 13 de telle sorte que les images capturées comportent bien l'image des différentes mires.

On peut également envisager que ce réglage se fasse à l'œil.

La mire non déformée 40 étant ici unique et indépendante de la lentille ophtalmique vérifiée 30, celle-ci est de préférence déjà présente dans le dispositif 10.

De plus, par construction, la mire non déformée 40 a été préalablement centrée par rapport au premier support 11 de la lentille ophtalmique vérifiée 30. La distance entre le premier support 11 et le troisième support 13 est en outre déjà ajustée à la valeur D2 adéquate.

Selon un mode de réalisation de l'invention, on choisit les première, deuxième et troisième distances D1, D2 et D3 telles que: D1 = 20 centimètres (cm) ; D2 = 5 cm ; D3 = 13 cm.

Ainsi configuré, le dispositif 10 peut être utilisé pour vérifier la conformité de la caractéristique optique vérifiée de la lentille ophtalmique vérifiée 30 par rapport à une caractéristique optique attendue.

Les rayons lumineux issus des moyens d'éclairement 15 sont filtrés ici par la mire déformée 20, traversent la lentille ophtalmique vérifiée 30 et sont détectés par lesdits moyens d'acquisition d'images 91.

Comme mentionné précédemment, ces rayons lumineux forment la mire-image 50, qui est l'image de la mire déformée 20 à travers la lentille ophtalmique vérifiée 30 dans le plan de la mire non déformée 40.

L'opérateur lance donc une mesure et la caméra 91 acquiert l'image de la mire-test 60 telle que représentée sur la figure 7.

Les moyens d'acquisition d'images 91 délivrent ensuite un signal représentatif de la mire-test 60, fonction de l'image de la mire-test 60, aux moyens de traitement électroniques 95.

L'étape b) de comparaison de ladite mire-test 60 avec la mire de référence 70 est réalisée de manière numérique par les moyens de traitement électroniques 95, par exemple par des techniques de traitement d'images connues de l'homme du métier.

La mire de référence 70 utilisée ici pour la comparaison avec la mire-test 60 de la figure 7 est illustrée sur la figure 8. Cette mire de référence 70 est ici mise en mémoire des moyens de traitement électroniques 95.

Comme mentionné précédemment, la mire-test 60 dont l'image est capturée par lesdits moyens d'acquisition d'images 91 est en correspondance avec cette mire de référence 70 si la caractéristique optique vérifiée de la lentille ophtalmique vérifiée 30 est conforme à la caractéristique optique attendue.

La mire de référence 70 représentée sur la figure 8 est ici d'une seule couleur noire et présente donc un contraste parfaitement homogène.

Dans l'exemple représenté ici sur la figure 7, l'image de la mire-test 60 présente quelques zones de couleur blanche 61, 62, 63, ici trois carrés de couleur blanche, alors que le reste de l'image de la mire-test 60 est de couleur uniformément noire.

On dira que le contraste, la couleur et la luminosité de la mire-test 60 sont quasi homogènes, si la mire-test 60 présente un contraste, une couleur ou une luminosité homogène sur toute sa surface à l'exception de quelques zones s'étendant sur moins de cinq pour cent de la surface totale de la mire-test 60.

La comparaison de la mire-test 60 représenté sur la figure 7 avec la mire de référence 70 représentée sur la figure 8 est réalisée de manière numérique par les moyens de traitement électronique 95 par exemple par des techniques de traitement d'images connues de l'homme du métier.

Si cette comparaison montre que les caractéristiques de couleur et/ou de contraste et/ou de luminosité de l'image capturée de la mire-test 60 sont parfaitement identiques à celles de la mire de référence 70 correspondante, les moyens de traitement électroniques 95 déduisent que la caractéristique optique vérifiée de la lentille ophtalmique vérifiée 30 est conforme, c'est-à-dire identique, à la caractéristique optique attendue.

Si cette comparaison montre que l'image capturée de la mire-test 60 présente des zones dont la couleur et/ou le contraste et/ou la luminosité n'est pas identique à la couleur, au contraste ou à la luminosité des zones correspondantes de la mire de référence 70, les moyens de traitement électroniques 95 déterminent une grandeur quantifiant la différence entre l'image de la mire-test 60 et la mire de référence 70.

Cette grandeur est par exemple une grandeur représentative de la surface de la mire-test 60 correspondant aux zones dont la couleur, le contraste et/ou la luminosité est différent de celui de la zone correspondante de la mire de référence 70.

Il peut s'agir par exemple du nombre de pixels de l'image de la mire-test 60 correspondant à ces zones.

Les moyens de traitement électroniques 95 comparent ensuite la valeur déterminée pour cette grandeur avec une valeur seuil représentant la surface maximale tolérée pour les zones différant de la mire de référence 70.

Cette valeur seuil correspond par exemple à une surface égale à cinq pour cent de la surface totale de l'image de la mire-test 60.

Si la valeur déterminée de cette grandeur est inférieure à ladite valeur seuil, les moyens de traitement électroniques 95 déduisent que la caractéristique optique vérifiée de la lentille ophtalmique vérifiée 30 est conforme à la caractéristique optique attendue.

Dans le cas contraire, ils déduisent qu'elle n'est pas conforme.

En pratique, ici cette comparaison fait apparaître qu'il existe trois zones de la mire-test 60, correspondant aux trois zones 61, 62, 63 apparaissant en blanc sur l'image capturée de la mire-test 60 représentée sur la figure 7, qui diffèrent des zones correspondantes de la mire de référence 70 pour laquelle ces zones correspondantes sont noires.

Ces trois zones 61, 62, 63 représentent ici moins de cinq pour cent de la surface totale de l'image de la mire-test 60.

Ainsi, les moyens de traitement électroniques 95 déduisent que la lentille ophtalmique vérifiée 30 présente une correction optique vérifiée conforme par rapport à la correction optique attendue.

L'homme du métier saura adapter la méthode de comparaison précédente entre la mire-test 60 et la mire de référence 70 à toutes réalisations de mire non déformée 40 et mire déformée 20 afin de déduire la conformité de la caractéristique optique vérifiée de la lentille ophtalmique vérifiée 30 avec la caractéristique optique attendue.

De préférence, il est prévu en outre que les moyens de traitement électroniques 95 comportent des moyens d'affichage 99 indiquant à l'opérateur le résultat de la comparaison.

Comme mentionné précédemment, la mire déformée 20 est déterminée en fonction de la mire non déformée 40.

Plus particulièrement, la mire déformée 20 est construite en fonction de la mire intermédiaire 80 dont un exemple est donnée sur la figure 5, la mire intermédiaire 80 étant déterminée fonction de la caractéristique optique attendue à partir de la mire non déformée 40.

La figure 3 détaille les étapes de construction 6 de la mire déformée 20 de la figure 6 et de détermination 5 de la mire intermédiaire 80 de la figure 5 à partir de la mire non déformée 40 représentée sur la figure 4 en utilisant un calcul par tracé de rayons optiques.

On considère pour cela une lentille ophtalmique attendue 130 présentant la caractéristique optique attendue. On considère également une pupille d'observation 19 de centre C et le plan 41 de la mire non déformée 40.

La mire non déformée 40 est représentée sur la figure 4. Elle est constituée ici d'un pavage régulier de M motifs carrés P(i) (1 ≤ i ≤ M) noirs et blancs repérés par leurs 4M sommets S(i,j) (1 ≤ j ≤ 4).

Pour construire la mire déformée 20, on calcule dans un premier temps par une méthode de tracé de rayons optiques la mire intermédiaire 80 qui est l'image de la mire non déformée 40 à travers la lentille ophtalmique attendue 130. Pour cela, on réalise successivement les étapes ci-après :
- on calcule le rayon 82 passant par le centre C de la pupille d'observation 19 et par un sommet S(i,j) appartenant à la mire non déformée 40,
- on prolonge le rayon incident 82 jusqu'à la lentille ophtalmique attendue 130,
- on calcule la déviation subie par le rayon incident 82 pour déterminer le rayon émergent 83 de la lentille ophtalmique attendue 130,
- on calcule l'intersection du rayon émergent 83 avec le plan 81 de la mire intermédiaire 80 au point Sdef(i,j) et
- on répète les étapes précédentes pour tous les sommets S(i,j) de la mire non déformée 40.

Pour réaliser le calcul par tracé de rayons optiques, les différents éléments sont disposés comme suit les uns par rapport aux autres :
- la lentille ophtalmique attendue 130 est située à une première distance D11 du plan 81 de la mire intermédiaire 80.
- le plan 41 de la mire non déformée 40 est située à une deuxième distance D12 de la lentille ophtalmique attendue 130, et
- la pupille d'observation 19 est située à une troisième distance D13 au-dessus du plan 41 de la mire non déformée 40,

Ces première, deuxième, et troisième distances D11, D12, et D13 définissent des positions relatives de la mire intermédiaire 80, de la lentille ophtalmique attendue 130, de la mire non déformée 40, et de la pupille d'observation 19 qui constituent des conditions optiques initiales pour la construction de la mire déformée 20.

Pour le calcul de tracé de rayons optiques de la figure 3 effectué pour construire la mire déformée 20 telle que positionnée dans la figure 2, les positions relatives respectives de la pupille d'observation 19, de la mire non déformée 40, de la lentille ophtalmique attendue 130 et de la mire intermédiaire 80 sont identiques aux positions relatives respectives des moyens d'acquisition d'images 91, de la mire-image 50, de la lentille ophtalmique vérifiée 30 et de la mire déformée 20.

La première distance D11 entre le plan 81 de la mire intermédiaire 80 et la lentille ophtalmique attendue 130 est donc égale à la première distance D1 entre la mire déformée 20 et la lentille ophtalmique vérifiée 30 définie précédemment sur la figure 2. De même, la deuxième distance D12 entre lentille ophtalmique attendue 130 et le plan 41 de la mire non déformée 40 est égale à la deuxième distance D2 entre la lentille ophtalmique vérifiée 30 et la mire non déformée 40 ; et la troisième distance D13 entre la mire non déformée 40 et la pupille d'observation 19 est égale à la troisième distance D3 entre la mire non déformée 40 et lesdits moyens d'acquisition d'images 91.

Le calcul par tracé de rayons optiques tel que décrit ci-dessus permet de déterminer les M motifs tétragonaux Pdef(i) dans le plan 81 de la mire intermédiaire 80 associés aux polygones P(i) de la mire non déformée 40. Ces tétragones Pdef(i) forment un pavage régulier déformé de motifs. On obtient donc la mire intermédiaire 80 telle que représentée sur la figure 5.

La figure 5 représente la mire intermédiaire 80 obtenue à partir de la mire non déformée 40 de la figure 4 décrite précédemment en effectuant un calcul de tracé de rayons optiques à travers la lentille ophtalmique attendue 130 correspondant à la lentille ophtalmique vérifiée 30 et ayant la correction optique suivante : puissance sphérique = 2 dioptries (δ); addition = 2 δ ; cylindre = 0 δ.

On peut observer sur la figure 5 que la mire intermédiaire 80 a une forme d'ensemble différente de la mire non déformée 40 et que les motifs de couleur noire ou blanche ne sont plus carrés mais ont une forme qui dépend de leur position dans la mire, à cause des déformations différentes introduites par la lentille ophtalmique attendue 130 utilisée pour le calcul.

À partir de la mire intermédiaire 80 représentée sur la figure 5, la mire déformée 20 telle que représentée sur la figure 6 est obtenue dans un second temps en prenant ici le *« négatif »* de la mire intermédiaire 80 représentée sur la figure 5. En pratique, il s'agit ici d'inverser la répartition des motifs opaques et du fond transparent. On observe donc que le contraste de la mire déformée 20 est non homogène.

Par ailleurs, on observe sur la figure 6 que les motifs de la mire déformée 20 ne sont pas ici droits et réguliers comme ceux de la mire non déformée de la figure 4, mais déformés à cause des différentes distorsions introduites par la lentille ophtalmique attendue 130.

En variante, pour la construction de la mire déformée telle que décrite précédemment, on pourrait également réaliser une transformation sur la mire intermédiaire en choisissant les couleurs des motifs de la mire déformée de telle sorte que la superposition de la mire-image avec la mire non déformée forme une mire-test laissant apparaître un signe reconnaissable tel qu'un logo, une forme, ou un texte.

Selon cette variante, le signe reconnaissable est indépendant de la lentille ophtalmique vérifiée. Le signe reconnaissable peut être par exemple déterminé et choisi *a priori* afin d'empêcher d'éventuelles contrefaçons.

On notera pour la suite de la description que les mire non déformée 40, mire intermédiaire 80 et mire déformée 20 représentées respectivement sur les figures 4, 5 et 6 sont utilisées également pour les modes de réalisation décrits sur les figures 9, 10, et 11. Ceci est valable que la mire déformée 20 et/ou la mire non déformée 40 soient analogiques ou numériques.

Dans un deuxième mode de réalisation du dispositif 10, représenté sur la figure 9, la mire non déformée 40 n'est pas analogique, c'est-à-dire réelle et matérialisée dans le dispositif 10 comme c'était le cas dans le cas du premier mode de réalisation du dispositif 10 décrit précédemment sur la figure 2.

La mire non déformée 40 est ici numérique, c'est-à-dire « virtuelle » en ce sens qu'elle existe uniquement sur un support numérique adapté à stocker et à fournir la mire non déformée 40.

Le dispositif 10 ne comporte donc pas de troisième support pour la mire non déformée 40.

La chaîne électronique de traitement 90 comprend ici une unité de stockage 93 qui a en mémoire la mire non déformée 40. Cette unité de stockage 93 est ici la mémoire d'un téléphone portable.

En variante, il peut s'agir de la mémoire d'un ordinateur, d'une tablette numérique ou de tout moyen permettant de stocker la mire non déformée sur un support numérique.

Les moyens d'éclairement 15, les premier et deuxième supports 11, 12 et lesdits moyens d'acquisition d'images 91 sont identiques à ceux décrits dans le premier mode de réalisation tel que décrit sur la figure 2.

Du fait de l'absence du troisième support et de l'utilisation d'une mire non déformée 40 numérique, lesdits moyens d'acquisition d'images 91 sont ici adaptés à capturer une image de la mire-image 50 dans un plan compris entre la lentille ophtalmique vérifiée 30 et lesdits moyens d'acquisition d'images 91.

Les moyens d'acquisition d'images 91 ne capturent donc pas une image de la mire-test 60 comme cela est le cas dans le premier mode de réalisation.

Les moyens de combinaison d'images 92 sont ici électroniques et numériques.

Ils sont adaptés à recevoir ici un signal représentatif de la mire-image 50 délivré par la caméra 91 et un signal représentatif de la mire non déformée 40 délivré par l'unité de stockage 93.

Les moyens de combinaison d'images 92 sont alors aptes à combiner de manière numérique la mire-image 50 avec la mire non déformée 40 pour former la mire-test 60 et délivrer un signal représentatif de la mire-test 60. Ce signal représentatif de la mire-test 60 est alors transmis aux moyens de traitement électroniques 95 pour analyse.

Plus précisément, dans le deuxième mode de réalisation de la figure 9, les moyens de traitement électroniques 95 comportent :
- une unité de traitement locale 96 adaptée à communiquer directement avec lesdits moyens de combinaison d'images 92 au moyen d'un réseau local, par exemple *via* un câble Ethernet 97, et
- une unité de traitement distante 98 adaptée à communiquer avec l'unité de traitement locale 96, par exemple *via* le réseau Internet.

L'unité de traitement locale 96 communique ici à l'unité de traitement distante 98 une référence de la lentille ophtalmique vérifiée 30, et l'unité de traitement distante 98 fournit à l'unité de traitement locale 96 la mire de référence 70 associée à la lentille ophtalmique 30 vérifiée en fonction de la référence communiquée.

La référence de la lentille ophtalmique vérifiée 30 comprend par exemple les informations suivantes : nom du produit, prescription associée, paramètres de port, paramètres de personnalisation.

L'unité de traitement locale 96 effectue alors l'opération de comparaison 3 entre la mire-test 60 reçue des moyens de combinaison d'images 92 et la mire de référence 70 puis l'opération de déduction 4 de la conformité ou non de la caractéristique optique vérifiée par rapport à la caractéristique optique attendue.

En variante, l'unité de traitement locale communique à l'unité de traitement distante la référence de la lentille ophtalmique vérifiée ainsi que le signal représentatif de la mire-test délivré par lesdits moyens de combinaison d'images. Alors, l'unité de traitement distante effectuent une opération de comparaison entre la mire-test reçue de l'unité de traitement locale et la mire de référence associée à la lentille ophtalmique vérifiée dont la référence lui a été communiquée par l'unité de traitement locale.

L'opération de déduction de la conformité ou non de la caractéristique optique vérifiée par rapport à la caractéristique optique attendue est alors réalisée par l'unité de traitement distante.

Dans le deuxième mode de réalisation du dispositif 10 de la figure 9, il est prévu de préférence des moyens d'affichage d'images 99 adaptés à recevoir et à afficher le signal délivré par lesdits moyens d'acquisition d'images 91 et représentatif de la mire-image 50 ou le signal délivré par lesdits moyens de combinaison d'images 92 et représentatif de la mire-test 60 pour permettre leur observation visuelle par l'opérateur.

Les moyens d'affichage d'images 99 est ici un moniteur numérique.

En variante, il peut s'agir par exemple de l'écran d'un appareil photo ou d'une caméra numérique, l'écran d'un téléphone portable ou d'une tablette numérique, un projecteur d'images associé à un support adapté à l'affichage des images, comme un écran réfléchissant sensiblement blanc, un verre dépoli ou muni d'un film diffusant.

De préférence, lesdits moyens d'affichage 99 sont également adaptés à recevoir et à afficher un signal représentatif de la mire de référence 70 fourni par les moyens de traitement électroniques 95. Il est alors possible d'afficher sur lesdits moyens d'affichage d'images la mire de référence 70 et aussi la mire-test 60 pour une observation visuelle complémentaire par l'opérateur.

Selon une variante du deuxième mode de réalisation, lesdits moyens d'acquisition d'images et lesdits moyens d'affichage d'images font partie du même appareil de capture et d'affichage.

Il peut s'agir par exemple d'un téléphone portable ou une tablette numérique comportant à la fois au moins une caméra et un écran d'affichage numériques.

En pratique, pour mettre en œuvre le procédé selon l'invention, l'opérateur réalise tout d'abord les mêmes opérations avec la lentille ophtalmique vérifiée 30 et avec la mire déformée 20 que celles décrites précédemment pour le premier mode de réalisation décrit précédemment avec la figure 2.

Il prend notamment soin, grâce aux moyens de réglages disposés sur le cadre 14 du dispositif 10 de placer :
- la lentille ophtalmique vérifiée 30 à une distance D223 de la caméra 91, et
- la mire déformée 20 à une distance D21 de la lentille ophtalmique vérifiée 30.

Ces distances D21 et D223 sont respectivement équivalentes à la distance D1 et à la somme des distances D2 et D3 du premier mode de réalisation et forment au moins partiellement les conditions optiques déterminées du dispositif 10. Elles sont identiques aux conditions optiques initiales de calcul de la mire déformée 20, comme dans le premier mode de réalisation.

Dans le mode de réalisation envisagé ici, elles sont associées à la mire déformée 20 et fournies avec elle, ou bien elles sont fixées et la mire déformée 20 est calculée en conséquence.

L'opérateur connecte ensuite son téléphone portable qui constitue ici lesdits moyens de stockage 93 auxdits moyens de combinaison d'images 92 en utilisant un câble de communication de données adapté. L'opérateur lance alors une application dédiée sur son téléphone portable à laquelle il indique la référence de la lentille ophtalmique vérifiée 30. En retour, cette application récupère dans la mémoire du téléphone portable la mire non déformée 40 correspondant à la lentille ophtalmique vérifiée 30 et la communique auxdits moyens de combinaison d'images 92 *via* le câble de communication de données.

Les moyens de combinaison d'images 92 combinent alors électroniquement et numériquement la mire-image 50 avec la mire non déformée 40 fournie par le téléphone portable pour former la mire-test 60 et en fournir un signal représentatif de la mire-test 60 aux moyens de traitement électroniques 95.

Les moyens de traitement électroniques 95 comparent alors la mire-test 60 reçue avec au moins une mire de référence 70 en fonction de la référence de la lentille ophtalmique vérifiée 30. Lesdits moyens de traitement délivrent alors un signal représentatif de la conformité ou non de la caractéristique optique vérifiée de la lentille ophtalmique vérifiée 30 par rapport à une caractéristique attendue.

Le signal représentatif de la conformité ou de la non-conformité, peut être par exemple un voyant de couleur verte, respectivement un voyant de couleur rouge.

En variante, les moyens de traitement électroniques 95 transmettent également le signal représentatif de la mire-test 60 à des moyens d'affichage d'image 99 pour affichage. Les moyens d'affichage d'image 99 sont ici un moniteur numérique sur lequel l'opérateur peut par exemple contrôler l'apparence de la mire-test 60.

Les moyens d'affichage d'images 99 peuvent également afficher le signal représentatif de la conformité sous la forme de voyants précédemment décrits.

Dans un troisième mode de réalisation du dispositif 10, représenté sur la figure 10, la mire déformée 20 est ici numérique et affichée sur l'écran d'affichage d'un téléphone portable 25.

En variante, il peut s'agir par exemple d'un moniteur, de l'écran d'un baladeur ou d'une tablette numérique.

L'écran d'affichage est éclairé par des moyens d'éclairement 15 interne au téléphone portable 25. Il s'agit ici du système de rétro-éclairage de cet écran d'affichage.

L'écran d'affichage permet soit d'afficher une image unique, soit une succession d'images, soit une vidéo.

Cet écran d'affichage est supporté par une plaque opaque positionnée de telle sorte que la mire déformée 20 soit à une distance D31 de la lentille ophtalmique vérifiée 30. Cette plaque opaque joue ainsi le rôle du deuxième support 12.

La distance D31 est ici équivalente à la distance D1 décrite dans les premier et deuxième modes de réalisation.

Le reste du dispositif 10 selon ce troisième mode de réalisation est similaire à ce qui a été décrit en référence au deuxième mode de réalisation.

En particulier, le premier support 11 et la chaîne électronique de traitement 90 sont identiques à ceux du deuxième mode de réalisation.

Le dispositif 10 permet alors de former la mire-image 50, qui est l'image de la mire déformée 20 à travers la lentille ophtalmique vérifiée 30, et de la capturer grâce auxdits moyens d'acquisition d'images 91, comme dans le deuxième mode de réalisation.

En pratique, pour mettre en œuvre le procédé selon l'invention, l'opérateur place la lentille ophtalmique vérifiée 30 sur le premier support 11 du dispositif 10, comme dans le premier mode de réalisation.

L'opérateur prend soin, grâce aux moyens de réglages disposés sur le cadre 14 du dispositif 10 de placer la lentille ophtalmique vérifiée 30 à une distance D323 de la caméra 91, équivalente à la somme des distances D2 et D3 et à la distance D223 respectivement des premier et deuxième modes de réalisation et déterminée de la même manière.

La lentille ophtalmique vérifiée 30 est fournie à l'opérateur avec une référence, comme décrit précédemment.

L'opérateur lance alors une application dédiée sur le téléphone portable 25 à laquelle il indique la référence de la lentille ophtalmique vérifiée 30. En retour, cette application affiche sur l'écran du téléphone la mire déformée 20.

Ceci étant fait, l'opérateur place la mire déformée 20 sur le deuxième support 12 du dispositif 10. Au moyen de la règle graduée présent sur le cadre 14 du dispositif 10, l'opérateur peut éventuellement régler la distance D31 entre le premier support 11 et le deuxième support 12.

La mire déformée 20 affichée sur l'écran du téléphone portable comporte deux points de repérage. L'opérateur utilise ces points pour les superposer avec les micro-gravures présentes sur la lentille ophtalmique vérifiée 30 afin de centrer la mire déformée 20 par rapport à la lentille ophtalmique vérifiée 30.

Les moyens d'acquisition d'images 91 acquièrent alors une image de la mire-image 50 qu'il transmet auxdits moyens de combinaison d'images 92.

Le reste du procédé de mise en œuvre en identique à ce qui a été décrit en référence au deuxième mode de réalisation.

L'opérateur peut en outre récupérer le téléphone portable utilisé pour afficher la mire déformée 20 et s'en servir ensuite comme unité de stockage 93 pour fournir une mire non déformée 40 auxdits moyens de combinaison d'images 92 tel que décrit précédemment dans le deuxième mode de réalisation.

Dans un quatrième mode de réalisation du dispositif 10, représenté sur la figure 11, la mire déformée 20 et la mire non déformée 40 sont affichées sur des écrans d'affichage 26, 46

Le premier support 11 et la chaîne électronique de traitement 90 sont identiques à ceux du premier mode de réalisation.

Le dispositif 10 présente une première ouverture 141 située dans l'une de ses parois latérales, ici dans sa partie basse, adaptée à recevoir le deuxième support 12 de la mire déformée 20.

La mire déformée 20 est constituée d'un écran d'affichage 26, ici un moniteur vidéo.

En variante, il peut s'agir par exemple de l'écran d'un téléphone portable, d'un baladeur ou d'une tablette numérique.

Les moyens d'éclairement 15 sont ici internes au moniteur vidéo. Il s'agit ici du système de rétro-éclairage du moniteur.

Le moniteur vidéo permet ici d'afficher une vidéo numérique. Il pourrait être adapté afin d'afficher soit une image unique, soit une succession d'images.

Le dispositif 10 comprend par ailleurs ici dans sa partie basse un miroir plan 101. Il comprend également une lame semi-réfléchissante 102 placée sensiblement à 45°, permettant de réfléchir la lumière provenant de la mire déformée 20 vers le miroir plan 101 puis de transmettre la lumière réfléchie par le miroir plan 101 vers la lentille ophtalmique vérifiée 30.

La mire déformée 20 est placée à une distance D141 du miroir semi-réfléchissant 102.

Le premier support 11 est situé à une distance D142 de la lame semi-réfléchissante 102 telle que la somme des distances D141 et D142 soit égale à une distance D41, équivalente à la première distance D1 entre la mire déformée 20 et la lentille ophtalmique vérifiée 30 du premier mode de réalisation.

Le dispositif 10 ainsi configuré permet de former la mire-image 50, qui est l'image de la mire déformée 20 à travers la lentille ophtalmique vérifiée 30.

Le dispositif 10 présente en outre une seconde ouverture 142 située dans la même paroi latérale que la première ouverture 141 mais ici dans sa partie haute, qui est adaptée à recevoir le troisième support 13 permettant de placer la mire non déformée 40.

La mire non déformée 40 est ici numérique, affichée sur écran d'affichage 46, ici un moniteur vidéo.

En variante, il peut s'agir par exemple de l'écran d'un téléphone portable, d'un baladeur ou d'une tablette numérique.

L'écran d'affichage 46 est éclairé par des moyens d'éclairement 152 interne au moniteur vidéo. Il s'agit ici du système de rétro-éclairage du moniteur.

Le moniteur vidéo permet ici d'afficher une vidéo numérique. Il pourrait être adapté afin d'afficher soit une image unique, soit une succession d'images.

Selon ce quatrième mode de réalisation, il est possible de diffuser sur chacun des moyens d'affichage des vidéos synchronisées de mires déformées 20 et de mires originales 40.

Le dispositif 10 comporte enfin une lame semi-réfléchissante 103 placée sensiblement à -45°, permettant de réfléchir la lumière provenant de la mire non déformée 40 vers lesdits moyens d'acquisition d'images 91.

La lame semi-réfléchissante 103 est placée à une distance D241 de la lentille ophtalmique 30 et à une distance D234 de la mire non déformée 40.

Les moyens d'acquisition d'images 91 sont placés à une distance D341 de la lame semi-réfléchissante 103, telle que :
- la somme des distances D234 et D241 est égale à une distance D42, équivalente à la deuxième distance D2 entre la lentille ophtalmique vérifiée 30 et la mire non déformée 40, et
- la somme des distances D241 et D341 est égale à une distance D43, équivalente à la troisième distance D3 entre la mire non déformée 40 et lesdits moyens d'acquisition d'images 91.

Les différentes distances D141, D142, D241, D234 et D341 ainsi définies, le calcul de la mire intermédiaire 80 peut être fait de la même manière que lors de la détermination décrite dans la figure 3.

Dans le cas de ce quatrième mode de réalisation, lesdits moyens de combinaison d'image comportent la lame semi-réfléchissante 103. En effet, c'est grâce à la lame semi-réfléchissante 103 qu'il est possible ici de positionner précisément la mire non déformée 40 dans le plan de la mire-image 50 de telle sorte que, dans ce plan, la mire non déformée 40 et la mire-image 50 se superposent pour former la mire-test 60 dont lesdits moyens d'acquisition d'images 91 capturent une image.

Les moyens d'acquisition d'images 91 sont aptes à capturer des images à une fréquence vidéo adaptée à la mire déformée 20 et à la mire non déformée 40. Les moyens d'acquisition d'images 91 sont donc ici de préférence une caméra numérique.

De la même manière, si les mire déformée 20 et mire non déformée 40 représentent des images uniques ou une succession d'images à intervalle déterminé, lesdits moyens d'acquisition d'images 91 peut être par exemple un appareil photo numérique.

En pratique, pour mettre en œuvre le procédé selon l'invention, l'opérateur place comme précédemment la lentille ophtalmique vérifiée 30 reçue sur le premier support 11 du dispositif 10.

Par construction, le dispositif 10 du quatrième mode de réalisation ne nécessite pas de réglage supplémentaire dans la mesure où les deuxième et troisième supports 12, 13 respectivement de la mire déformée 20 et de la mire non déformée 40 sont déjà positionnés dans le dispositif 10.

Les autres étapes de mise en œuvre du procédé selon l'invention sont similaires à celle décrites en référence au premier mode de réalisation.

Selon une variante commune à tous les modes de réalisation décrits précédemment, la mire non déformée 40 comporte une zone locale d'intérêt. Un exemple est donné sur la figure 12 où la mire non déformée 40, de forme rectangulaire, comporte dans sa partie centrale supérieure une zone annulaire 44 définit par deux cercles 45A, 45B ici concentriques.

D'un autre côté, comme représentée sur la figure 13, la mire déformée 20 comporte une figure particulière objet 24 en forme de cercle allongé dans une direction horizontale.

Lorsque l'on forme l'image de la mire déformée 20 de la figure 13 à travers la lentille ophtalmique vérifiée 30 dont on souhaite vérifier une caractéristique optique, par exemple la puissance optique en vision de loin pour un verre correcteur progressif, on obtient une mire-image 50 telle que représentée sur la figure 14. Cette mire-image 50 comporte également une figure particulière image 51 de forme quasi circulaire.

Dans le procédé selon l'invention, on superpose la mire-image 50 obtenue avec la mire non déformée 40 de la figure 12 pour obtenir une mire-test 60 représentée sur la figure 15. Cette mire-test 60 comporte une zone locale d'intérêt 64 en forme d'anneau ainsi qu'une figure particulière 65 de forme quasi circulaire. On observe que la figure particulière 65 n'est pas entièrement comprise dans la zone locale d'intérêt 64.

Pour vérifier la conformité de la lentille ophtalmique vérifiée 30 par rapport ici à la puissance optique en vision de loin, on compare la mire-test 60 obtenue aux deux mires de référence 71, 72 représentées sur les figures 16 et 17.

Ces deux mires de références 71, 72 représentent des cas extrêmes pour lesquelles :
- dans la première mire de référence 71, la figure particulière 73 est située sur le bord extérieur de l'anneau 74 formant une zone locale d'intérêt ;
- dans la deuxième mire de référence 72, la figure particulière 75 est située sur le bord intérieur de l'anneau 76 formant une zone locale d'intérêt.

La conformité est déduite si la forme et la position relative de la figure particulière 65 présente dans la mire-test 60 se situe par exemple entre les deux situations extrêmes représentées par les mires de référence 71, 72. Ainsi, dans le cas présent de la mire-test 60 représenté sur la figure 15, on peut déduire que la caractéristique optique vérifiée, ici la puissance optique en vision lointaine, n'est pas conforme avec la caractéristique optique attendue car la figure particulière 65 n'est pas entièrement comprise dans la zone locale d'intérêt 64.

Pour vérifier la conformité de différentes caractéristiques optiques d'une même lentille ophtalmique vérifiée 30, on peut envisager de disposer de plusieurs couples de mires comprenant chacun une mire non déformée 40 et une mire déformée 20 associée, chacun des couples de mires servant à contrôler un aspect particulier de la lentille ophtalmique vérifiée 30 correctrice, par exemple : la puissance en vision de près, la puissance en vision de loin, la position du point à 85% de l'addition, la position de la méridienne, la forme et l'état de surface de la face avant ou de la face arrière de la lentille ophtalmique 30.

En variante encore, la mire déformée peut se trouver « à l'infini » par rapport à la lentille ophtalmique vérifiée, c'est-à-dire située à une distance de la lentille ophtalmique vérifiée très grande par rapport à sa distance focale. Dans ce cas, les étapes de mise en œuvre du procédé selon l'invention ne sont pas modifiées.

Pour vérifier la conformité d'une caractéristique optique sur une large gamme de lentilles ophtalmiques, on peut encore envisager d'insérer un système optique supplémentaire entre lesdits moyens d'acquisition d'images et la lentille ophtalmique à vérifier afin de limiter l'étendue de puissances des différentes lentilles ophtalmiques d'une gamme et d'utiliser le dispositif de vérification dans la gamme la plus large. Le système optique supplémentaire peut être par exemple un système autofocus ou une série de lentilles optiques de différentes puissances constantes permettant de ramener l'ensemble des lentilles ophtalmiques vérifiées dans une gamme étroite de puissance en vision de loin.

Enfin, on peut envisager en variante un dispositif de vérification n'utilisant pas de moyens d'acquisition d'images ni de moyens électroniques de traitement. Il peut s'agir par exemple d'un dispositif où l'orifice réservé normalement au positionnement de l'objectif des moyens d'acquisition d'image est laissé libre.

Dans ce cas, l'opérateur peut observer directement à l'œil l'image de la mire déformée et la mire non déformée. La combinaison des mires est faite par l'opérateur lors de la fusion des images des mires. Il peut alors comparer la mire-test observée avec au moins une mire de référence associée à la lentille ophtalmique vérifiée.

Cette mire de référence est fournie par ailleurs sur un support adéquat. Il peut s'agir par exemple d'une feuille sur laquelle est représentée la mire de référence ou bien de l'écran d'affichage d'un moniteur, d'un téléphone portable, ou d'une tablette numérique.

## Revendications

1. Procédé de vérification de la conformité d'une caractéristique optique vérifiée d'une lentille ophtalmique vérifiée (30) par rapport à une caractéristique optique attendue d'une lentille ophtalmique attendue (130), à partir d'une mire non déformée (40) et d'une mire déformée (20) présentant chacune une couleur ou une intensité non uniforme, ladite mire déformée (20) étant construite à partir d'une mire intermédiaire (80) qui est l'image de la mire non déformée (40) au travers de ladite lentille ophtalmique attendue (130) dans des conditions optiques initiales,
ledit procédé comportant les étapes de :
a) former (A) une mire-image (50), qui est l'image de ladite mire déformée (20) à travers ladite lentille ophtalmique vérifiée (30), dans des conditions optiques déterminées où les positions relatives de ladite mire-image (50) et de ladite mire déformée (20) par rapport à ladite lentille ophtalmique vérifiée (30) sont identiques aux positions relatives respectives de ladite mire non déformée (40) et de ladite mire intermédiaire (80) par rapport à ladite lentille ophtalmique attendue (130) dans lesdites conditions optiques initiales,
b) superposer (B) ladite mire-image (50) avec ladite mire non déformée (40) pour former une mire-test (60), ladite mire déformée (20) étant déterminée en fonction de ladite mire non déformée (40) de manière à ce que ladite mire-test (60) présente une couleur ou une intensité uniforme,
c) comparer (C) ladite mire-test (60) à au moins une mire de référence (70), et
d) déduire (D) la conformité de ladite caractéristique optique vérifiée avec ladite caractéristique optique attendue en fonction de la comparaison précédente.

2. Procédé de vérification selon la revendication 1, dans lequel ladite mire intermédiaire (80) est déterminée par un calcul de tracé de rayons optiques dans lesdites conditions optiques initiales correspondant à l'observation de ladite lentille ophtalmique attendue (130) depuis le centre d'une pupille d'observation (19), ledit calcul de tracé de rayons optiques étant réalisé en fonction d'au moins un des paramètres suivants :
- la position de ladite pupille d'observation (19) par rapport à ladite lentille ophtalmique attendue (130),
- la position de ladite pupille d'observation (19) par rapport à ladite mire non déformée (40), ou
- la position de ladite mire non déformée (40) par rapport à ladite lentille ophtalmique attendue (130).

3. Procédé de vérification selon la revendication 1 ou 2, dans lequel ladite mire non déformée (40) et/ou ladite mire déformée (20) et/ou la mire-image (50) sont constituées d'un pavage de motifs de différentes couleurs ou de différents niveaux de gris, présentant ou non différents niveaux de transparence.

4. Dispositif (10) de vérification de la conformité d'une caractéristique optique vérifiée d'une lentille ophtalmique vérifiée (30) par rapport à une caractéristique optique attendue d'une lentille ophtalmique attendue (130), à partir d'une mire non déformée (40) numérique et d'une mire déformée (20) présentant chacune une couleur ou une intensité non uniforme, ladite mire déformée (20) étant construite à partir d'une mire intermédiaire (80) qui est l'image de la mire non déformée (40) au travers de ladite lentille ophtalmique attendue (130) dans des conditions optiques initiales,
ledit dispositif (10) de vérification comprenant :
- un premier support (11), apte à recevoir ladite lentille ophtalmique vérifiée (30),
- un deuxième support (12), apte à recevoir au moins ladite mire déformée (20),
- des moyens d'éclairement (15), aptes à éclairer ladite mire déformée (20),
agencés pour permettre la formation d'une mire-image (50) correspondant à l'image de ladite mire déformée (20) à travers ladite lentille ophtalmique vérifiée (30) lorsque ladite lentille ophtalmique vérifiée (30) est placée sur ledit premier support (11), les positions relatives de ladite mire-image (50) et de ladite mire déformée (20) par rapport à ladite lentille ophtalmique vérifiée (30) étant identiques aux positions relatives respectives de ladite mire non déformée (40) et de ladite mire intermédiaire (80) par rapport à ladite lentille ophtalmique attendue (130) dans lesdites conditions optiques initiales, et
- des moyens d'acquisition d'images (91), aptes à capturer ladite mire-image (50),
- des moyens de combinaison d'images (92) pour superposer ladite mire-image (50) avec ladite mire non déformée (40) pour former une mire-test (60), ladite mire déformée (20) étant déterminée en fonction de ladite mire non déformée (40) de manière à ce que ladite mire-test (60) présente une couleur ou une intensité uniforme,
- une unité de stockage (93) apte à fournir ladite mire non déformée (40) auxdits moyens de combinaison d'images (92)
- des moyens de traitement électroniques (95) programmés pour comparer ladite mire-test (60) à au moins une mire de référence (70), et déduire la conformité de ladite caractéristique optique vérifiée de ladite lentille ophtalmique vérifiée (30) avec ladite caractéristique optique attendue en fonction de cette comparaison.

5. Dispositif (10) de vérification de la conformité d'une caractéristique optique vérifiée d'une lentille ophtalmique vérifiée (30) par rapport à une caractéristique optique attendue d'une lentille ophtalmique attendue (130), à partir d'une mire non déformée (40) et d'une mire déformée (20) analogiques portées chacune par un support physique présentant chacune une couleur ou une intensité non uniforme, ladite mire déformée (20) étant construite à partir d'une mire intermédiaire (80) qui est l'image de la mire non déformée (40) au travers de ladite lentille ophtalmique attendue (130) dans des conditions optiques initiales,
ledit dispositif (10) de vérification comprenant :
- un premier support (11), apte à recevoir ladite lentille ophtalmique vérifiée (30),
- un deuxième support (12), apte à recevoir au moins ladite mire déformée (20),
- des moyens d'éclairement (15), aptes à éclairer ladite mire déformée (20),
agencés pour permettre la formation d'une mire-image (50) correspondant à l'image de ladite mire déformée (20) à travers ladite lentille ophtalmique vérifiée (30) lorsque ladite lentille ophtalmique vérifiée (30) est placée sur ledit premier support (11),
- des moyens de combinaison d'images (13; 103) pour superposer ladite mire-image (50) avec ladite mire non déformée (40) pour former une mire-test (60), les positions relatives de ladite mire-image (50) et de ladite mire déformée (20) par rapport à ladite lentille ophtalmique vérifiée (30) étant identiques aux positions relatives respectives de ladite mire non déformée (40) et de ladite mire intermédiaire (80) par rapport à ladite lentille ophtalmique attendue (130) dans lesdites conditions optiques initiales, ladite mire déformée (20) étant déterminée en fonction de ladite mire non déformée (40) de manière à ce que ladite mire-test (60) présente une couleur ou une intensité uniforme,
- des moyens d'acquisition d'images (91), aptes à capturer une image de ladite mire-test (60) et à transmettre ladite image capturée à des moyens de traitement électroniques (95) programmés pour comparer ladite mire-test (60) à au moins une mire de référence (70), et déduire la conformité de ladite caractéristique optique vérifiée de ladite lentille ophtalmique vérifiée (30) avec ladite caractéristique optique attendue en fonction de cette comparaison.

6. Dispositif (10) de vérification selon l'une des revendications 4 ou 5, dans lequel lesdits moyens de traitement électroniques (95) comportent :
- une unité de traitement locale (96), apte à communiquer avec lesdits moyens d'acquisition d'images (91) et/ou lesdits moyens de combinaison d'images (92), et
- une unité de traitement distante (98), apte à communiquer avec ladite unité de traitement locale (96) par l'intermédiaire d'un réseau, et
dans lequel les opérations de comparaison (C) de ladite mire-test (60) avec ladite mire de référence (70) et de déduction (D) de la conformité de ladite caractéristique optique vérifiée par rapport à ladite caractéristique optique attendue sont réalisées par ladite unité de traitement locale (96) ou ladite unité de traitement distante (98).

7. Dispositif (10) de vérification selon la revendication 6, dans lequel :
- ladite unité de traitement locale (96) communique à ladite unité de traitement distante (98) une référence de ladite lentille ophtalmique vérifiée (30), et
- ladite unité de traitement distante (98) fournit à ladite unité de traitement locale (96) ladite mire de référence (70) associée à ladite lentille ophtalmique vérifiée (30).

8. Dispositif (10) de vérification selon l'une des revendications 4 à 7, comprenant des moyens de réglage permettant d'ajuster la position relative desdits premier (11) et deuxième (12) supports, desdits moyens d'éclairement (15) et desdits moyens d'acquisition d'images (91).

## Patentansprüche

1. Verfahren zur Überprüfung der Übereinstimmung eines überprüften optischen Merkmals einer überprüften ophthalmischen Linse (30) bezogen auf ein erwartetes optisches Merkmal einer erwarteten ophthalmischen Linse (130) anhand eines nicht verformten Prüfbilds (40) und eines verformten Prüfbilds (20), die jeweils eine ungleichmäßige Farbe oder Intensität aufweisen, wobei das verformte Prüfbild (20) aus einem Zwischenprüfbild (80) aufgebaut ist, welches das Abbild des nicht verformten Prüfbilds (40) durch die erwartete ophthalmische Linse (130) unter anfänglichen optischen Bedingungen ist,
das Verfahren aufweisend die Schritte des:
a) Bildens (A) eines Prüfbild-Abbilds (50), welches das Abbild des verformten Prüfbilds (20) durch die überprüfte ophthalmische Linse (30) ist, unter bestimmten optischen Bedingungen, wobei die relativen Positionen des Prüfbild-Abbilds (50) und des verformten Prüfbilds (20) bezogen auf die überprüfte ophthalmische Linse (30) an den jeweiligen relativen Positionen des nicht verformten Prüfbilds (40) und des Zwischenprüfbilds (80) bezogen auf die erwartete ophthalmische Linse (130) unter den anfänglichen optischen Bedingungen identisch sind,
b) Überlagerns (B) des Prüfbild-Abbilds (50) mit dem nicht verformten Prüfbild (40), um ein Test-Prüfbild (60) zu bilden, wobei das verformte Prüfbild (20) in Abhängigkeit von dem nicht verformten Prüfbild (40) so bestimmt wird, dass das Test-Prüfbild (60) eine gleichmäßige Farbe oder Intensität aufweist,
c) Vergleichens (C) des Test-Prüfbilds (60) mit mindestens einem Referenzprüfbild (70), und
d) Ableitens (D) der Übereinstimmung des überprüften optischen Merkmals mit dem erwarteten optischen Merkmal in Abhängigkeit von dem vorhergehenden Vergleich.

2. Überprüfungsverfahren nach Anspruch 1, wobei das Zwischenprüfbild (80) durch eine Verlaufsberechnung optischer Strahlen unter den anfänglichen optischen Bedingungen bestimmt wird, die der Betrachtung der erwarteten ophthalmischen Linse (130) vom Zentrum einer Betrachtungspupille (19) entspricht, wobei die Verlaufsberechnung optischer Strahlen in Abhängigkeit von mindestens einem der folgenden Parameter durchgeführt wird:
- die Position der Betrachtungspupille (19) bezogen auf die erwartete ophthalmische Linse (130),
- die Position der Betrachtungspupille (19) bezogen auf das nicht verformte Prüfbild (40), oder
- die Position des nicht verformten Prüfbilds (40) bezogen auf die erwartete ophthalmische Linse (130).

3. Überprüfungsverfahren nach Anspruch 1 oder 2, wobei das nicht verformte Prüfbild (40) und/oder das verformte Prüfbild (20) und/oder das Prüfbild-Abbild (50) von einem Pflaster aus Motiven unterschiedlicher Farben oder unterschiedlicher Graustufen gebildet sind, die verschiedene Transparenzgrade aufweisen oder nicht.

4. Vorrichtung (10) zur Überprüfung der Übereinstimmung eines überprüften optischen Merkmals einer überprüften ophthalmischen Linse (30) bezogen auf ein erwartetes optisches Merkmal einer erwarteten ophthalmischen Linse (130) anhand eines nicht verformten digitalen Prüfbilds (40) und eines verformten Prüfbilds (20), die jeweils eine ungleichmäßige Farbe oder Intensität aufweisen, wobei das verformte Prüfbild (20) aus einem Zwischenprüfbild (80) aufgebaut ist, welches das Abbild des nicht verformten Prüfbilds (40) durch die erwartete ophthalmische Linse (130) unter anfänglichen optischen Bedingungen ist,
die Überprüfungsvorrichtung (10) umfassend:
- einen ersten Träger (11), der geeignet ist, die überprüfte ophthalmische Linse (30) aufzunehmen,
- einen zweiten Träger (12), der geeignet ist, wenigstens das verformte Prüfbild (20) aufzunehmen,
- Beleuchtungsmittel (15), die geeignet sind, das verformte Prüfbild (20) zu beleuchten,
die angeordnet sind, die Bildung eines Prüfbild-Abbilds (50), das dem Abbild des verformten Prüfbilds (20) entspricht, durch die überprüfte ophthalmische Linse (30) zu gestatten, wenn die überprüfte ophthalmische Linse (30) auf dem ersten Träger (11) platziert ist, wobei die relativen Positionen des Prüfbild-Abbilds (50) und des verformten Prüfbilds (20) bezogen auf die überprüfte ophthalmische Linse (30) an den jeweiligen relativen Positionen des nicht verformten Prüfbilds (40) und des Zwischenprüfbilds (80) bezogen auf die erwartete ophthalmische Linse (130) unter den anfänglichen optischen Bedingungen identisch sind, und
- Bilderfassungsmittel (91), die geeignet sind, das Prüfbild-Abbild (50) aufzunehmen,
- Bildkombinationsmittel (92), um das Prüfbild-Abbild (50) mit dem nicht verformten Prüfbild (40) zu überlagern, um ein Test-Prüfbild (60) zu bilden, wobei das verformte Prüfbild (20) in Abhängigkeit von dem nicht verformten Prüfbild (40) so bestimmt wird, dass das Test-Prüfbild (60) eine gleichmäßige Farbe oder Intensität aufweist,
- eine Speichereinheit (93), die geeignet ist, das nicht verformte Prüfbild (40) den Bildkombinationsmitteln (92) bereitzustellen
- elektronische Verarbeitungsmittel (95), die dafür programmiert ist, das Test-Prüfbild (60) mit mindestens einem Referenzprüfbild (70) zu vergleichen und die Übereinstimmung des überprüften optischen Merkmals der überprüften ophthalmischen Linse (30) mit dem erwarteten optischen Merkmal in Abhängigkeit von diesem Vergleich abzuleiten.

5. Vorrichtung (10) zur Überprüfung der Übereinstimmung eines überprüften optischen Merkmals einer überprüften ophthalmischen Linse (30) bezogen auf ein erwartetes optisches Merkmal einer erwarteten ophthalmischen Linse (130) anhand eines nicht verformten analogen Prüfbilds (40) und eines verformten analogen Prüfbilds (20), die jeweils von einem physischen Träger getragen werden, die jeweils eine ungleichmäßige Farbe oder Intensität aufweisen, wobei das verformte Prüfbild (20) aus einem Zwischenprüfbild (80) aufgebaut ist, welches das Abbild des nicht verformten Prüfbilds (40) durch die erwartete ophthalmische Linse (130) unter anfänglichen optischen Bedingungen ist,
die Überprüfungsvorrichtung (10) umfassend:
- einen ersten Träger (11), der geeignet ist, die überprüfte ophthalmische Linse (30) aufzunehmen,
- einen zweiten Träger (12), der geeignet ist, wenigstens das verformte Prüfbild (20) aufzunehmen,
- Beleuchtungsmittel (15), die geeignet sind, das verformte Prüfbild (20) zu beleuchten,
die angeordnet sind, die Bildung eines Prüfbild-Abbilds (50), das dem Abbild des verformten Prüfbilds (20) entspricht, durch die überprüfte ophthalmische Linse (30) zu gestatten, wenn die überprüfte ophthalmische Linse (30) auf dem ersten Träger (11) platziert ist,
- Bildkombinationsmittel (13; 103), um das Prüfbild-Abbild (50) mit dem nicht verformten Prüfbild (40) zu überlagern, um ein Test-Prüfbild (60) zu bilden, wobei die relativen Positionen des Prüfbild-Abbilds (50) und des verformten Prüfbilds (20) bezogen auf die überprüfte ophthalmische Linse (30) an den jeweiligen relativen Positionen des nicht verformten Prüfbilds (40) und des Zwischenprüfbilds (80) bezogen auf die erwartete ophthalmische Linse (130) unter den anfänglichen optischen Bedingungen identisch sind, wobei das verformte Prüfbild (20) in Abhängigkeit von dem nicht verformten Prüfbild (40) so bestimmt wird, dass das Test-Prüfbild (60) eine gleichmäßige Farbe oder Intensität aufweist,
- Bilderfassungsmittel (91), die geeignet sind, ein Abbild des Test-Prüfbilds (60) aufzunehmen und das aufgenommene Abbild an elektronische Verarbeitungsmittel (95) zu übertragen, die dafür programmiert sind, das Test-Prüfbild (60) mit mindestens einem Referenzprüfbild (70) zu vergleichen und die Übereinstimmung des überprüften optischen Merkmals der überprüften ophthalmischen Linse (30) mit dem erwarteten optischen Merkmal in Abhängigkeit von diesem Vergleich abzuleiten.

6. Überprüfungsvorrichtung (10) nach einem der Ansprüche 4 oder 5, wobei die elektronischen Verarbeitungsmittel (95) Folgendes aufweisen:
- eine lokale Verarbeitungseinheit (96), die geeignet ist, mit den Bilderfassungsmitteln (91) und/oder den Bildkombinationsmitteln (92) zu kommunizieren, und
- eine entfernte Verarbeitungseinheit (98), die geeignet ist, über ein Netzwerk mit der lokalen Verarbeitungseinheit (96) zu kommunizieren, und
wobei die Vorgänge des Vergleichens (C) des Test-Prüfbilds (60) mit dem Referenzprüfbild (70) und des Ableitens (D) der Übereinstimmung des überprüften optischen Merkmals bezogen auf das erwartete optische Merkmal durch die lokale Verarbeitungseinheit (96) oder die entfernte Verarbeitungseinheit (98) durchgeführt werden.

7. Überprüfungsvorrichtung (10) nach Anspruch 6, wobei:
- die lokale Verarbeitungseinheit (96) der entfernten Verarbeitungseinheit (98) eine Referenz der überprüften ophthalmischen Linse (30) mitteilt, und
- die entfernte Verarbeitungseinheit (98) der lokalen Verarbeitungseinheit (96) das Referenzprüfbild (70) bereitstellt, das der überprüften ophthalmischen Linse (30) zugeordnet ist.

8. Überprüfungsvorrichtung (10) nach einem der Ansprüche 4 bis 7, umfassend Einstellmittel, die es gestatten, die relative Position des ersten (11) und zweiten (12) Trägers der Beleuchtungsmittel (15) und der Bilderfassungsmittel (91) anzupassen.

## Claims

1. A method for verifying the conformity of a verified optical characteristic of a verified ophthalmic lens (30) to an expected optical characteristic of an expected ophthalmic lens (130), on the basis of an undeformed test pattern (40) and a deformed test pattern (20) each having a nonuniform color or intensity, said deformed test pattern (20) being constructed from an intermediate test pattern (80) which is the image of the undeformed test pattern (40) through said expected ophthalmic lens (130) under initial optical conditions,
said method comprising steps of:
a) forming (A) an image test pattern (50), which is the image of said deformed test pattern (20) through said verified ophthalmic lens (30), under set optical conditions where the relative positions of said image test pattern (50) and of said deformed test pattern (20) relative to said verified ophthalmic lens (30) are identical to the respective relative positions of said undeformed test pattern (40) and of said intermediate test pattern (80) relative to said expected ophthalmic lens (130) under said initial optical conditions;
b) superimposng (B) said image test pattern (50) with said undeformed test pattern (40) in order to form a test test pattern (60), said deformed test pattern (20) being determined as a function of said undeformed test pattern (40) so that said test test pattern (60) has a uniform color or intensity;
c) comparing (C) said test test pattern (60) to at least one reference test pattern (70); and
d) deducing (D) the conformity of said verified optical characteristic to said expected optical characteristic depending on the preceding comparison.

2. The verifying method as claimed in claim 1, wherein said intermediate test pattern (80) is determined by an optical ray tracing calculation under said initial optical conditions corresponding to the observation of said expected ophthalmic lens (130) from the center of an observation pupil (19), said optical ray tracing calculation being carried out depending on at least one of the following parameters:
- the position of said observation pupil (19) relative to said expected ophthalmic lens (130);
- the position of said observation pupil (19) relative to said undeformed test pattern (40); or
- the position of said undeformed test pattern (40) relative to said expected ophthalmic lens (130).

3. The verifying method as claimed in claim 1 or 2, wherein said undeformed test pattern (40) and/or said deformed test pattern (20) and/or the image test pattern (50) consist of a tiling of features of various colors or various gray levels, possibly having various transparency levels.

4. A device (10) for verifying the conformity of a verified optical characteristic of a verified ophthalmic lens (30) to an expected optical characteristic of an expected ophthalmic lens (130), on the basis of a numerical undeformed test pattern (40) and a deformed test pattern (20) each having a nonuniform color or intensity, said deformed test pattern (20) being constructed from an intermediate test pattern (80) which is the image of the undeformed test pattern (40) through said expected ophthalmic lens (130) under initial optical conditions,
said device (10) for verifying comprising:
- a first holder (11), able to receive said verified ophthalmic lens (30);
- a second holder (12), able to receive at least said deformed test pattern (20); and
- illuminating means (15), able to illuminate said deformed test pattern (20),
these three being arranged in order to allow an image test pattern (50) corresponding to the image of said deformed test pattern (20) through said verified ophthalmic lens (30) to be formed when said verified ophthalmic lens (30) is placed on said first holder (11), where the relative positions of said image test pattern (50) and of said deformed test pattern (20) relative to said verified ophthalmic lens (30) are identical to the respective relative positions of said undeformed test pattern (40) and of said intermediate test pattern (80) relative to said expected ophthalmic lens (130) under said initial optical conditions; and
- image-acquiring means (91), able to capture at least said image test pattern (50);
- image-combining means (92) for superimposing said image test pattern (50) with said undeformed test pattern (40) in order to form a test test pattern (60), said deformed test pattern (20) being determined as a function of said undeformed test pattern (40) so that said test test pattern (60) has a uniform color or intensity;
- a storage unit (93) able to deliver said undeformed test pattern (40) to said image-combining means (92); and
- electronic processing means (95) programmed to compare said test test pattern (60) to at least one reference test pattern (70), and to deduce the conformity of said verified optical characteristic of said verified ophthalmic lens (30) to said expected optical characteristic depending on this comparison.

5. A device (10) for verifying the conformity of a verified optical characteristic of a verified ophthalmic lens (30) to an expected optical characteristic of an expected ophthalmic lens (130), on the basis of an analogic undeformed test pattern (40) and an analogic deformed test pattern (20) each being supported by a physical support and having a nonuniform color or intensity, said deformed test pattern (20) being constructed from an intermediate test pattern (80) which is the image of the undeformed test pattern (40) through said expected ophthalmic lens (130) under initial optical conditions,
said device (10) for verifying comprising:
- a first holder (11), able to receive said verified ophthalmic lens (30);
- a second holder (12), able to receive at least said deformed test pattern (20); and
- illuminating means (15), able to illuminate said deformed test pattern (20),
these three being arranged in order to allow an image test pattern (50) corresponding to the image of said deformed test pattern (20) through said verified ophthalmic lens (30) to be formed when said verified ophthalmic lens (30) is placed on said first holder (11),
- image-combining means (13; 103) for superimposing said image test pattern (50) with said undeformed test pattern (40) in order to form a test test pattern (60), where the relative positions of said image test pattern (50) and of said deformed test pattern (20) relative to said verified ophthalmic lens (30) are identical to the respective relative positions of said undeformed test pattern (40) and of said intermediate test pattern (80) relative to said expected ophthalmic lens (130) under said initial optical conditions, said deformed test pattern (20) being determined as a function of said undeformed test pattern (40) so that said test test pattern (60) has a uniform color or intensity;
- image-acquiring means (91), able to capture at least an image of said test test pattern (60) and transmit said captured image to electronic processing means (95) programmed to compare said test test pattern (60) to at least one reference test pattern (70), and to deduce the conformity of said verified optical characteristic of said verified ophthalmic lens (30) to said expected optical characteristic depending on this comparison.

6. The verifying device (10) as claimed in claim 4 or 5, wherein said electronic processing means (95) comprise:
- a local processing unit (96), able to communicate with said image-acquiring means (91) and/or said image-combining means (92); and
- a remote processing unit (98), able to communicate with said local processing unit (96) via a network;
and wherein the operations of comparing (C) said test test pattern (60) with said reference test pattern (70) and of deducing (D) the conformity of said verified optical characteristic to said expected optical characteristic are carried out by said local processing unit (96) or said remote processing unit (98).

7. The verifying device (10) as claimed in claim 6, wherein:
- said local processing unit (96) communicates to said remote processing unit (98) a reference of said verified ophthalmic lens (30); and
- said remote processing unit (98) delivers to said local processing unit (96) said reference test pattern (70) associated with said verified ophthalmic lens (30).

8. The verifying device (10) as claimed in one of claims 4 to 7, comprising regulating means that make it possible to adjust the relative position of said first (11) and second (12) holders, of said illuminating means (15) and of said image-acquiring means (91).
